# EUROPEAN PATENT APPLICATION

(11) **EP 1 369 454 A1**
(43) Date of publication of application: **10.12.2003**
(21) Application number: 02700573.5
(22) Date of filing: 13.02.2002
(51) Int. Cl.: C08L 9/00, C08L 91/00, C08K 3/06, C08K 5/14, C08K 5/54, C08J 5/00, C08J 9/04, B32B 27/00

(54) **OIL EXTENDED 1, 2-POLYBUTADIENE AND METHOD OF MANUFACTURING THE POLYBUTADIENE, AND COMPOSITION AND FORMED PRODUCT THEREOF**

(30) Priority: 15.02.2001 JP 2001037842; 09.04.2001 JP 2001109489; 27.04.2001 JP 2001132900; 24.05.2001 JP 2001154844; 07.06.2001 JP 2001172324; 22.06.2001 JP 2001189868; 27.07.2001 JP 2001227246; 27.07.2001 JP 2001227247
(71) Applicant: JSR Corporation, Tokyo 104-8410 (JP)
(72) Inventor: MAEDA, Masaki, c/o JSR CORPORATION, Tokyo 104-8410 (JP); KOUJINA, Junji, c/o JSR CORPORATION, Tokyo 104-8410 (JP); MORINO, Katsuaki, c/o JSR CORPORATION, Tokyo 104-8410 (JP); AOYAMA, Teruo,c/o JSR CORPORATION, Tokyo 104-8410 (JP); OKADA, Kouji, c/o JSR CORPORATION, Tokyo 104-8410 (JP); FURUICHI, Minoru, c/o JSR CORPORATION, Tokyo 104-8410 (JP)
(74) Representative: Leson, Thomas Johannes Alois, Dipl.-Ing.
(86) International application number: JP0201172
(87) International publication number: WO02064673

(57) **Abstract**

Disclosed are oil-extended 1,2-polybutadiene containing an extender oil in a specific amount based on 1, 2-polybutadiene and a production method thereof, and a composition further containing another (co)polymer, a foaming agent, a crosslinking agent, a softening agent and other additives. The resulting oil-extended 1,2-polybutadiene and the composition thereof has excellent functions characterizing conventional 1,2-polybutadiene and is further excellent in wear resistance, fluidity (processability), coloring properties (high distinctness of images), flexibility, attachability and the like, so that they can be applied to various formed articles, shoe sole materials and laminate having high performances.

## Description

### Technical Field

The present invention relates to novel oil-extended 1, 2-polybutadiene which has excellent functions characterizing conventional 1,2-polybutadiene and is excellent in wear resistance, fluidity (processability), coloring properties (high distinctness of image), flexibility and attachability, and a method for producing the same; and a composition thereof and a formed article having no flow mark and excellent in appearance. Particularly, the invention relates to oil-extended 1,2-polybutadiene useful as various formed articles such as automobile parts, building material parts, footwear, toys, miscellaneous goods and sporting and health goods, various sheets and films, other industrial goods, buffer materials and packaging materials, and a method for producing the same; and a composition thereof and a formed article, a shoe sole material excellent in flexibility, wear resistance and lightness in weight, a laminate which can be uniformly laminated even to a base layer having a complicated shape and is excellent in vibration-damping properties, antivibration properties, sound insulating properties, sound absorbing properties, soundproofing properties and sealing properties, and a method for producing the same.

Further, the present invention relates to a high-performance master batch containing a novel oil-extended 1,2-polybutadiene and excellent in fluidity and dispersibility.

### Background Art

1,2-Polybutadiene controlled to appropriate crystallinity has not only a function as a thermoplastic elastomer, because it has a structure comprising a crystalline-rich region and an amorphous part, but also a function as a thermoplastic resin or rubber increased in crosslinking density for producing a conventional crosslinked formed article, because it has a carbon-carbon double bond high in chemical reactivity in its molecule. Further, this 1,2-polybutadiene has excellent processability, so that it has been applied as a modifier for other resins and thermoplastic elastomers, and as a polymer material for medical use.

Now, it has come to be needed that the 1,2-polybutadiene controlled in crystallinity has higher performances (particularly, wear resistance), in addition to its excellent processability.

Further, when 1,2-polybutadiene is used for various new applications, lack of fluidity and low coloring properties have come to be pointed out.

Furthermore, a block copolymer of an aromatic vinyl compound and a conjugated diene compound can be processed as a thermoplastic elastomer by forming techniques similar to those employed for general thermoplastic resins. In that case, the copolymer has the advantages of not particularly needing compounding of a crosslinking agent and a heat crosslinking process,and moreover,having moderate elasticity. Accordingly, a shoe sole material has been produced by injection molding or the like, using the block copolymer of the aromatic vinyl compound and the conjugated diene compound, in the field of shoe production. However, the above-mentioned copolymer has the disadvantage of generating flow marks on a surface of a formed article to cause poor appearance, because of its poor fluidity in forming.

Then, in order to improve poor appearance of the formed article, it has been carried out that 1,2-polybutadiene is blended with the block copolymer of the aromatic vinyl compound and the conjugated diene compound. The use of this method improves poor appearance of the formed article, but raises the problem of deteriorating wear resistance, an important performance as the shoe sole material.

The shoe sole material tends to save weight, and for the purpose of weight saving, a foam has been mostly used. At present, as a method for producing the sole material from the foam, there has been used (1) a method of producing a plate-like foam with a plate-like mold and stamping out it to a shoe sole shape to use, (2) a method of using a shoe sole-shaped foam produced with a shoe sole-shaped mold, or a method of stamping out a shoe sole-shaped foam produced to a shoe sole shape to use, using a crosslinking (curing) press which has hitherto been used. Such methods are suitable for limited production of a wide variety of products, but unsuitable for mass production. Accordingly, the process of producing the shoe sole material from the foam contributes to a rise in cost of the shoe sole material.

A crosslinked foam using an ethylene-vinyl acetate copolymer (EVA), natural rubber, synthetic rubber or the like has hitherto been used as the shoe sole material. Of these, the crosslinked foam using the EVA is large in deformation (permanent set in fatigue) in use, and at the same time, wet skid resistance most important as the shoe sole material is not sufficient. On the other hand, the crosslinked foam of the rubber family using natural rubber or synthetic rubber such as styrene-butadiene rubber or polybutadiene rubber is better in permanent set in fatigue and wet skid resistance than the EVA foam. However, a product largely shrinks after crosslinking and foaming, which causes high percent defective due to variations in product size, resulting in a factor of a rise in cost. It has been therefore required that the cost is lowered.

As such a shoe sole material excellent in wet skid resistance and low in the degree of shrinkage of the product after crosslinking and foaming, 1,2-polybutadiene controlled to appropriate crystallinity has come to be used. 1,2-Polybutadiene is also good in mechanical strength (T_{B}, E_{B}) , interlaminar shear strength, permanent compressive strain and the like, and has become to be widely utilized. However, when this 1,2-polybutadiene is used for various new applications, it has come to be pointed out that fluidity (processability), formability and coloring properties are not sufficient.

Further, in the fields of sound insulating materials, soundproofing materials, vibration-damping materials, steel plate-reinforcing materials, clearance-filling materials, antivibration materials, sealing materials, thermoset plastic dampers and the like, various techniques for laminating a rubber composition to a metal base layer such as a steel plate or filling it between metal base layers have hitherto come in practice. For example, there are "a rubber composition for antibivration, soundproofing and sound insulating materials" described in Japanese Patent Laid-Open Publication (Hei) 1-139534 and "a low-temperature curing type high foaming sealer" described in Japanese Patent Laid-Open Publication (Sho) 62-62882. However, these fill only with open cell sponge, and condensed water generated in the sponge transfers into a continuous foam structure to come into contact with a metal surface, which causes metal corrosion. Thus, a technique for producing a material filling a clearance without metal corrosion and excellent in vibration-damping properties, sound absorbing properties and sealing properties in a satisfying form has been required.

Utilizing the characteristics of 1,2-polybutadiene controlled to appropriate crystallinity, the present applicant for patent has proposed a high hard crosslinked product containing the polybutadiene, crosslinkable by a heating medium and useful for vibration-damping materials, sound insulating materials and thermoset plastic dampers, (Japanese Patent Laid-Open Publication (Hei) 1-297443) and a laminate containing the polybutadiene (Japanese Patent Laid-Open Publication (Hei) 2-57340). However, when this 1,2-polybutadiene is used for various new applications, the problem is encountered that fluidity is insufficient in filling a clearance, resulting in insufficient attachability to a base layer.

In recent years, as a master batch used in producing a (co)polymer composition, needs for a granular master batch of rubber chemicals in the market have become strong. The reasons for this include the following (1) to (3):
(1) In respect to working environment in a workplace, fine powdery rubber chemicals and the like are prevented from scattering;
(2) Chemicals for rubber or plastics to be added to a rubber or plastic composition can be mixed for a short period of time, and are excellent in dispersion in the composition; and
(3) Automatic measurement of chemicals for rubber or plastics is possible.

In order to solve the above-mentioned (1) and (2), for example, sheet-like master batches of rubber chemicals using ordinary rubber and rubber chemicals treated with oil have hitherto been known. However, there has recently been a growing demand for a granular master batch of chemicals from the viewpoints of automatic measurement of rubber chemicals and advantages for handling.

As a technique relating to the master batch of chemicals for rubber, a composition of compounding agents for rubber comprising three components of chemicals for rubber, rubber and an ethylene-vinyl acetate copolymer, and oils is proposed in Japanese Patent Laid-Open Publication (Hei) 1-223130. However, some kind of chemical for rubber or some composition ratio of three components gives stickiness to the composition, which causes a problem in processing or in storage of the composition. For example, when a sheet-like master batch is produced, sheeting is carried out with rolls. In this case, when the stickiness of a composition is high, the sheet sticks to surfaces of the rolls to cause poor releasability, resulting in significantly impaired workability in some cases. Further, for the purpose of rationalizing the measurement of a mixed composition, granules are formed with an extrusion granulator in some cases. When the stickiness of the composition is high, the granules stick to one another by their own weight (blocking) to form a block during storage of the granulated product, thereby impairing the functions thereof. In particular, in storage in the summer season when the outside air temperature is elevated, this tendency is significant.

On the other hand, Japanese Patent Laid-Open Publication (Sho) 53-41342 describes that a rubber is selected as a binder and a process oil for rubber is selected as an oil in producing a master batch according to a composition comprising a rubber, a vulcanization accelerator and the like. However, in this master batch, there is also the problem of the stickiness of itself, and there is the above-mentioned problem of blocking.

In order to solve the above-mentioned problem, Japanese Patent Laid-Open Publication (Hei) 7-224188 proposes a master batch of chemicals for rubber or plastics comprising the chemicals for rubber or plastics, 1,2-polybutadiene and a softening agent as indispensable components, maintaining a good shape which is an essential object of a master batch, and further preventing the stickiness of the composition without impairing good dispersibility in a rubber, an elastomer, a plastic and the like, thereby improving roll processability or blocking during storage. However, this master batch has the problems that fluidity is not sufficient, so that the dispersibility of various chemicals is not said to be sufficient yet, that it is difficult to disperse a large amount of chemicals in the master batch, and that a technique is required to prepare the master batch and a long period of time is required for the preparation.

### Disclosure of the Invention

The present inventors have intensively studied in view of the present state as described above. As a result, the inventors have accomplished the present invention by providing novel oil-extended 1,2-polybutadiene which has excellent functions characterizing conventional 1, 2-polybutadiene and is excellent in wear resistance, fluidity (processability), coloring properties (high distinctness of image), flexibility and attachability, and a method for producing the same; and a composition thereof and a formed article, a shoe sole material having no flow mark and excellent in appearance, and excellent in flexibility, wear resistance and lightness in weight, a laminate which can be uniformly laminated even to a base layer having a complicated shape and is excellent in vibration-damping properties, antivibration properties, sound insulating properties, sound absorbing properties and sealing properties, and a method for producing the same.

### Best Mode for Carrying Out the Invention

1. Oil-extended 1,2-polybutadiene containing (e) an extender oil in an amount of 1 to 200 parts by weight based on 100 parts by weight of (a) 1,2-polybutadiene.
2. The oil-extended 1,2-polybutadiene described in the above 1, in which (a) the 1,2-polybutadiene is syndiotactic 1,2-polybutadiene.
3. The oil-extended 1,2-polybutadiene described in the above 1 or 2, in which (a) the 1,2-polybutadiene has a weight average molecular weight of 10,000 to 5, 000, 000, and a 1,2-vinyl bond content of 70% or more.
4. The oil-extended 1,2-polybutadiene described in any one of the above 1 to 3, in which (e) the extender oil has a viscosity gravity constant (V. G. C. value) of 0.790 to 0.999.
5. A method for producing oil-extended 1, 2-polybutadiene comprising a first step of mixing 1 to 200 parts by weight of (e) an extender oil with 100 parts by weight (converted to solid content) of a 1,2-polybutadiene solution in a solution state, and a second step of conducting desolvation.
6. An oil-extended 1,2-polybutadiene composition containing (C) foaming agent in an amount of 1 to 300 parts by weight based on 100 parts by weight of (A) the oil-extended 1,2-polybutadiene described in any one of the above 1 to 4.
7. A master batch containing 2 to 95% by weight of the (A) component described in any one of the above 1 to 4 and 98 to 5% by weight of (G) a functional compound for rubber or plastics [with the proviso that (A)+(G) = 100% by weight].
8. The master batch described in the above 7, in which (G) the functional compound described above is (C) a foaming agent, (D) a crosslinking agent, (E) a softening agent and (F) at least one component selected from the group consisting of a filling agent, a bituminous material, an activator, a flame retardant, an antioxidant, an antiaging agent, a lubricant, a coloring agent, an ultraviolet absorber, an antistatic agent, a thermal stabilizer, a processing aid, a light (weather) -resisting agent and an antimicrobial agent, excluding the above-mentioned (C) to (E) components.
9. A thermoplastic polymer composition containing 1 to 99 parts by weight of (A) the oil-extended 1,2-polybutadiene described in any one of the above 1 to 4 and 99 to 1 part by weight of (B) at least one selected from the group consisting of a thermoplastic resin, a thermoplastic elastomer, a natural rubber and a synthetic rubber other than the above-mentioned (A) component [with the proviso that (A)+(B) = 100 parts by weight].
10. The thermoplastic polymer composition described in the above 9 further containing (C) a foaming agent in an amount of 1 to 300 parts by weight based on 100 parts by weight of the total amount of the (A) component and the (B) component.
11. The thermoplastic polymer composition described in the above 9 or 10 further containing (D-1) at least one selected from the group consisting of a combination of sulfur or a compound producing sulfur by heating and a vulcanization accelerator, an organic peroxide or a combination of an organic peroxide and a multifunctional monomer, and a combination of a silanol compound and an aqueous agent.
12. A formed article obtained by forming the oil-extended 1,2-polybutadiene described in any one of the above 1 to 4.
13. A shoe sole material obtained by foaming the oil-extended 1,2-polybutadiene composition described in the above 6.
14. A shoe sole material obtained by crosslinking and forming the oil-extended 1,2-polybutadiene composition described in the above 6.
15. A shoe sole material obtained by crosslinking and forming the thermoplastic polymer composition described in any one of the above 9 to 11.
16. A laminate comprising a base layer having laminated thereon a resin layer containing the oil-extended 1,2-polybutadiene composition described in the above 6.
17. The laminate described in the above 16, in which an asphalt layer is allowed to intervene between the base layer and the resin layer.
18. A method for producing a laminate which comprises filling the oil-extended 1,2-polybutadiene composition described in the above 6 in a clearance between a plurality of base layers, and crosslinking and foaming it.
19. A method for producing a laminate which comprises filling the thermoplastic polymer composition described in any one of the above 9 to 11 in a clearance between a plurality of base layers, and crosslinking and foaming it.
20. An automobile interior constituent in which the oil-extended 1,2-polybutadiene composition described in the above 6 is integrated with woven fabric and/or nonwoven fabric.

### (A) Oil-Extended 1,2-Polybutadiene

### (a) 1,2-Polybutadiene

The 1,2-polybutadiene used in the present invention may be any 1,2-polybutadiene. However, preferred is one obtained by polymerizing butadiene in the presence of a catalyst containing a cobalt compound and an aluminoxane.

The 1,2-vinyl bond content in butadiene bond units of the 1,2-polybutadiene of the invention is preferably 70% or more, more preferably 80% or more, and particularly preferably 90% or more.

The 1,2-polybutadiene of the invention exhibits properties as a good thermoplastic elastomer by that the 1,2-vinyl bond content is 70% or more.

The 1,2-polybutadiene of the invention is preferably 1,2-polybutadiene having crystallinity, and the melting point thereof is preferably within the range of 50 to 130°C, and more preferably within the range of 60 to 120°C. The melting point within this range results in an excellent balance between mechanical strength such as tensile strength or tearing strength and flexibility.

The 1,2-polybutadiene of the invention may be copolymerized with a small amount of a conjugated diene other than butadiene. The conjugated dienes other than butadiene include 1,3-pentadiene, a higher alkyl group-substituted 1,3-butadiene derivative, a 2-alkyl-substituted 1, 3-butadiene and the like. Of these, the higher alkyl group-substituted 1,3-butadiene derivatives include 1-pentyl-1,3-butadiene, 1-hexyl-1,3-butadiene, 1-heptyl-1,3-butadiene, 1-octyl-1,3-butadiene and the like.

Here, typical examples of the 2-alkyl-substituted 1,3-butadienes include 2-methyl-1,3-butadiene (isoprene), 2-ethyl-1,3-butadiene, 2-propyl-1,3-butadiene, 2-isopropyl-1,3-butadiene, 2-butyl-1,3-butadiene, 2-isobutyl-1,3-butadiene, 2-amyl-1,3-butadiene, 2-isoamyl-1,3-butadiene, 2-hexyl-1, 3-butadiene, 2-cyclohexyl-1,3-butadiene, 2-isohexyl-1,3-butadiene, 2-heptyl-1,3-butadiene, 2-isoheptyl-1,3-butadiene, 2-octyl-1,3-butadiene, 2-isooctyl-1,3-butadiene and the like. Of these conjugated dienes, preferred examples of the conjugated dienes copolymerized with butadiene include isoprene and 1, 3-pentadiene. The content of butadiene in monomer components subjected to polymerization is preferably 50 mol% or more, and particularly 70 mol% or more.

The 1,2-polybutadiene of the invention is obtained by polymerizing butadiene preferably in the presence of the catalyst containing the cobalt compound and the aluminoxane, as described above. The above-mentioned cobalt compounds include preferably an organic acid salt of cobalt having 4 or more carbon atoms. Specific examples of the organic acid salts of cobalt include a butyrate, a hexanoate, a heptylate, an octylate of an acid such as 2-ethyl-hexylic acid, a decanoate, a salt of a higher fatty acid such as stearic acid, oleic acid or erucic acid, a benzoate, an alkyl-, aralkyl- or allyl-substituted benzoate of an acid such as a tolylate, a xylylate or an ethylbenzoic acid, a naphthoate and an alkyl-, aralkyl- or allyl-substituted naphthoate. Of these, 2-ethylhexylic acid or a so-called octyl acid salt, a stearate and a benzoate are preferred for excellent solubility in a hydrocarbon solvent.

The above-mentioned aluminoxanes include, for example, one represented by the following general formula (I) or general formula (II):

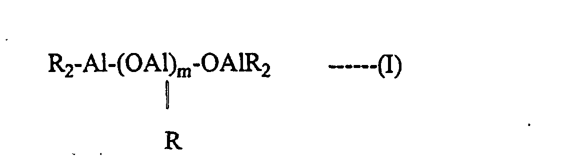

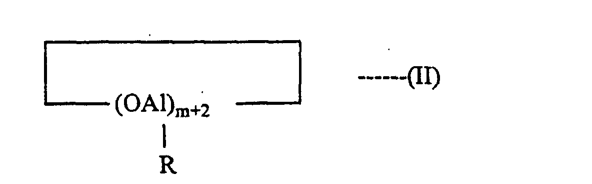

In the aluminoxane represented by general formula (I) or (II), R is a hydrocarbon group such as a methyl group, an ethyl group, a propyl group or a butyl group, preferably a methyl group or an ethyl group, and particularly preferably a methyl group. m is an integer of 2 or more, preferably an integer of 5 or more, and more preferably an integer of 10 to 100. Specific examples of the aluminoxanes include methylaluminoxane, ethyl-aluminoxane, propylaluminoxane, butylaluminoxane and the like, and methylaluminoxane is particularly preferred.

It is very preferred that the polymerization catalyst contains a phosphine compound, in addition to the above-mentioned cobalt compound and aminoxane. The phosphine compound is a component effective for the control of activation of the polymerization catalyst, the vinyl bond structure and crystallinity, and preferably includes an organic phosphorus compound represented by the following general formula (III):

P(Ar)ₙ(R)₃₋ₙ (III)

In general formula (III), Ar represents a group shown below:

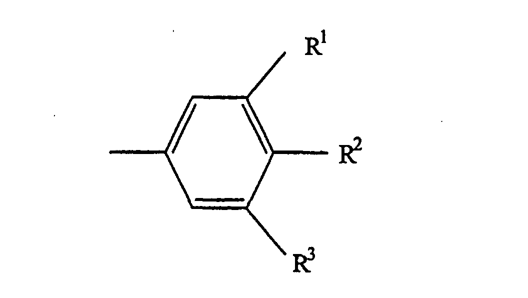

(In the above-mentioned group, R¹, R² and R³, which may be the same or different, each represent a hydrogen atom, an alkyl group preferably having 1 to 6 carbon atoms, a halogen atom, an alkoxyl group preferably having 1 to 6 carbon atoms or an aryl group preferably having 6 to 12 carbon atoms.)

Further, in general formula (III), R represents a cycloalkyl group or an alkyl-substituted cycloalkyl group, and n is an integer of 0 to 3.

Specific examples of the phosphine compounds represented by general formula (III) include tri-(3-methylphenyl) phosphine, tri-(3-ethylphenyl)phosphine, tri-(3,5-dimethyl-phenyl)phosphine, tri-(3,4-dimethylphenyl)phosphine, tri-(3-isopropylphenyl)phosphine, tri-(3-t-butylphenyl)-phosphine, tri-(3,5-diethylphenyl)phosphine, tri-(3-methyl-5-ethylphenyl)phosphine, tri-(3-phenylphenyl)phosphine, tri-(3,4,5-trimethylphenyl)phosphine, tri-(4-methoxy-3,5-dimethylphenyl)phosphine, tri-(4-ethoxy-3,5-di-ethylphenyl)phosphine, tri-(4-butoxy-3,5-dibutylphenyl)-phosphine, tri (p-methoxyphenyl)phosphine, tricyclohexylphosphine, dicyclohexylphenylphosphine, tribenzylphosphine, tri(4-methylphenylphosphine), tri(4-ethylphenylphosphine) and the like. Of these, particularly preferred examples thereof include triphenylphosphine, tri-(3-methylphenyl)phosphine, tri-(4-methoxy-3,5-dimethylphenyl)phosphine and the like.

Further, as the cobalt compound, a compound represented by the following general formula (IV) can be used.

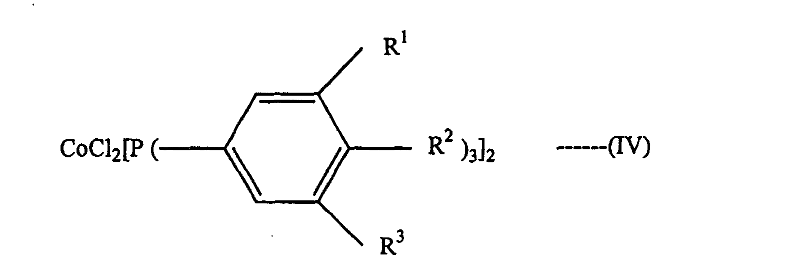

In general formula (IV), R¹, R² and R³ are the same as R¹, R² and R³ in the above-mentioned general formula (III).

The compound represented by the above-mentioned general formula (IV) is a complex having a phosphine compound in which n is 3 in the above-mentioned general formula (III), as a ligand to cobalt chloride. In using this cobalt compound, one previously synthesized may be used, or a method of contacting cobalt chloride with the phosphine compound in a polymerization system may be used. The amount of 1,2-vinyl bonds and crystallinity of the resulting 1,2-polybutadiene can be controlled by variously selecting the phosphine compound in the complex.

Specific examples of the cobalt compounds represented by the above-mentioned general formula (IV) include cobalt bis(triphenylphosphine)dichloride, cobalt bis[tris(3methylphenylphosphine)]dichloride, cobalt bis[tris(3-ethylphenylphosphine)]dichloride, cobalt bis[tris(4-methylphenylphosphine)]dichloride, cobalt bis[tris(3,5-dimethylphenylphosphine)]dichloride, cobalt bis [tris(3,4-dimethylphenylphosphine)]dichloride, cobalt bis[tris(3-isopropylphenylphosphine)] dichloride, cobalt bis[tris(3-t-butylphenylphosphine)]dichloride, cobalt bis[tris(3,5-diethylphenylphosphine)]dichloride, cobalt bis[tris(3-methyl-5-ethylphenylphosphine)]dichloride, cobalt bis[tris(3-phenylphenylphosphine)]dichloride, cobalt bis[tris(3,4,5-trimethylphenylphosphine)]dichloride, cobalt bis[tris(4-methoxy-3,5-dimethylphenylphosphine)]dichloride, cobalt bis[tris(4-ethoxy-3,5-diethylphenylphosphine)] dichloride, cobalt bis[tris(4-butoxy-3,5-dibutylphenylphosphine)]dichloride, cobalt bis[tris(4-methoxyphenylphosphine)]dichloride, cobalt bis [tris(3-methoxyphenylphosphine)] dichloride, cobalt bis[tris(4-dodecylphenylphosphine)]dichloride, cobalt bis [tris (4-ethylphenylphosphine)]dichloride and the like.

Of these, particularly preferred are cobalt bis(triphenylphosphine)dichloride, cobalt bis[tris(3-methylphenylphosphine)]dichloride, cobalt bis[tris(3,5-dimethylphenylphosphine)]dichloride, cobalt bis[tris(4-methoxy-3,5-dimethylphenylphosphine)]dichloride and the like.

As the amount of the catalyst used, the cobalt compound is used in an amount of 0.001 to 1 mmol, preferably about 0.01 to about 0.5 mol, in terms of a cobalt atom per mole of butadiene for homopolymerization of butadiene, and per mole of the total amount of butadiene and a conjugated diene other than butadiene for copolymerization. Further, the amount of the phosphine compound used is usually from 0.1 to 50, preferably from 0.5 to 20, and more preferably from 1 to 20, as the atomic ratio of phosphorus to cobalt (P/Co) . Furthermore, the amount of the aluminoxane used is usually from 4 to 10⁷, and preferably from 10 to 10⁶, as the atomic ratio of aluminum to cobalt of the cobalt compound (Al/Co). When the complex represented by general formula (IV) is used, the amount of the aluminoxane used follows the above description, taking the amount of the phosphine compound used as 2 by the atomic ratio of phosphorus to cobalt (P/Co).

Inert organic solvents used as polymerization solvents include, for example, aromatic hydrocarbon solvents such as benzene, toluene, xylene and cumene, aliphatic hydrocarbon solvents such as n-pentane, n-hexane and n-butane, alicyclic hydrocarbon solvents such as cyclopentane, methylcyclopentane and cyclohexane, and mixtures thereof.

The polymerization temperature is usually from-50 to 120°C, and preferably from -20 to 100°C. The polymerization reaction may be either batch-wise or continuous. The monomer concentration in the solvent is usually from 5 to 50% by weight, and preferably from 10 to 35% by weight. Further, for producing the polymer, in order not to inactivate the catalyst and polymer of the invention, such consideration as contamination with a compound having an inactivating function such as oxygen, water or carbon dioxide in a polymerization system is decreased to the utmost is necessary. When the polymerization reaction proceeds to a desired stage, an alcohol, another polymerization terminator, an antiaging agent, an antioxidant, an ultraviolet absorber and the like are added to the reaction mixture, and then, the polymer formed is separated, washed and dried according to conventional methods to be able to obtain 1,2-polybutadiene used in the invention.

The weight average molecular weight (Mw) of (a) the 1,2-polybutadiene used in the invention is preferably from 10, 000 to 5,000,000, more preferably from 10,000 to 1,500,000, and particularly preferably from 50, 000 to 1, 000, 000. When the Mw is less than 10,000, fluidity after oil extension is extremely high, and subsequent processing becomes very difficult. On the other hand, exceeding 5, 000, 000 results in extremely low fluidity after oil extension, and processing unfavorably becomes very difficult.

Since (a) the 1, 2-polybutadiene used in the invention alone has sufficient strength even in a state where crosslinking is not conducted, it is suitable for injection molding, extrusion molding and non-crosslinking forming applications such as industrial parts and film applications. Further, it is also excellent in crosslinking reactivity, so that it is also suitably used for crosslinked polymer applications, reaction aid applications for a polymer for vulcanization and the like. In that case, there is no particular limitation on the processing method, and mixing by melt kneading and the like using a roll, a kneader, a Banbury mixer, a screw extruder, a feeder ruder extruder and the like used in ordinary resin and rubber processing is possible.

### (e) Extender Oils

There is no particular limitation on the extender oil used for oil extending (a) the 1,2-polybutadiene described above to prepare the oil-extended 1,2-polybutadiene of the invention, as long as it is an extender oil or a softening agent ordinarily used in a diene polymer. Preferred examples thereof include extender oils of the mineral oil family.

As the extender oil of the mineral oil family, preferred is one having a viscosity gravity constant (hereinafter referred to as "V. G. C." for brevity) of 0.790 to 0.999. More preferred is one having a V. G. C. of 0.790 to 0.949, and particularly preferred is one having a V. G. C. of 0.790 to 0.912.

As the extender oils, aromatic extender oils, naphthenic extender oils and paraffinic extender oils are generally known.

Of these, the aromatic extender oils satisfying the above-mentioned viscosity gravity constant include Diana Process Oil AC-12, AC460, AH-16 and AH-58 manufactured by Idemitsu Kosan Co., Ltd., Mobile Sol K, Mobile Sol 22 and Mobile Sol 130 manufactured by Exxon Mobil Co., Kyoseki Process X50, X100 and X140 manufactured by Nikko Kyoseki Co., Ltd., Rezox No. 3 and Dutorex 729UK manufactured by Shell Chemicals Co., Ltd., Koumorex 200, 300, 500 and 700 manufactured by Nippon Oil Co., Ltd., Esso Process Oil 110 and Esso Process Oil 120 manufactured by Exxon Mobil Co., Mitsubishi 34 Heavy Process Oil, Mitsubishi 44 Heavy Process Oil, Mitsubishi 38 Heavy Process Oil and Mitsubishi 39 Heavy Process Oil manufactured by Mitsubishi Oil Co., Ltd., and the like.

Further, the naphthenic extender oils satisfying the above-mentioned viscosity gravity constant include Diana Process Oil NS-24, NS-100, NM-26, NM-280 and NP-24 manufactured by Idemitsu Kosan Co., Ltd., Naprex 38 manufactured by Exxon Mobil Co., Fukkol FLEX #1060N, #1150N, #1400N, #2040N and #2050N manufactured by Fuji Kosan Co., Ltd., Kyoseki Process R25, R50, R200 and R1000 manufactured by Nikko Kyoseki Co. , Ltd., Shellflex 371JY, Shellflex 371N, Shellflex 451, Shellflex N-40, Shellflex 22, Shellflex 22R, Shellflex 32R, Shellflex 100R, Shellflex 100S, Shellflex 100SA, Shellflex 220RS, Shellflex 220S, Shellflex 260, Shellflex 320R and Shellflex 680 manufactured by Shell Chemicals Co., Ltd., Koumorex No. 2 Process Oil manufactured by Nippon Oil Co., Esso Process Oil L-2 and Esso Process Oil 765 manufactured by Exxon Mobil Co., Mitsubishi 20 Light Process Oil manufactured by Mitsubishi Oil Co., Ltd., and the like.

Furthermore, the paraffinic extender oils satisfying the above-mentioned viscosity gravity constant include Diana Process Oil PW-90, PW-380, PS-32, PS-90 and PS-430 manufactured by Idemitsu Kosan Co., Ltd., Fukkol Process P-100, P-200, P-300, P400 and P-500 manufactured by Fuji Kosan Co., Ltd., Kyoseki Process P-200, P-300, P-500, Kyoseki EPT 750, Kyoseki EPT 1000 and Kyoseki Process S90 manufactured by Nikko Kyoseki Co., Ltd., Lubrex 26, Lubrex 100 and Lubrex 460 manufactured by Shell Chemicals Co., Ltd., Esso Process Oil 815, Esso Process Oil 845 and Esso Process Oil B-1 manufactured by Exxon Mobil Co., Naprex 32 manufactured by Exxon Mobil Co., Mitsubishi 10 Light Process Oil manufactured by Mitsubishi Oil Co., Ltd., and the like.

Thus, (a) the 1,2-polybutadiene is oil extended with (e) the extender oil, which makes it possible to finely disperse (C) the foaming agent, (D) the crosslinking agent and further the filler such as carbon black or silica in the (a) component, homogeneously and in large amounts, thereby being able to improve various characteristics such as processability and mechanical strength of the formed article. In addition, surprisingly, this can improves (A) the resulting oil-extended 1,2-polybutadiene in attachability, clearance-filling properties, fluidity, wear resistance, mechanical strength such as rigidity (vibration-damping properties and steel plate-reinforcing properties) and foaming properties. Further, forming appearance and coloring properties (high distinctness of image) of the resulting formed article become more excellent by blending with the following (B) component with this (A) component.

The compounding amount of (e) the extender oil used in the invention is from 1 to 200 parts by weight, preferably from 10 to 100 parts by weight, more preferably from 15 to 80 parts by weight, and particularly preferably from 20 to 70 parts by weight, based on 100 parts by weight of (a) the 1,2-polybutadiene. Less than 1 part by weight results in poor wear resistance-improving effect, attachability, fluidity, dispersibility, kneading processability (master batch cohesiveness) processability and formability, whereas exceeding 200 parts by weight causes significant softening, resulting in poor processability.

### Production Method of (A) Oil-Extended 1,2-Polybutadiene

There is no particular limitation on the production method of the (A) component, which includes, for example, a method of adding (e) the extender oil to a polymerization solution of (a) the 1,2-polybutadiene, followed by mixing in a solution state. This method can omit a process of mixing the (a) component and the (e) component, and is preferred because of excellent mixing uniformity of both. When (e) the extender oil is added to the polymerization solution of the (a) component, it is preferably added after the termination of polymerization, for example, after the addition of a terminal modifier or after the addition of the polymerization terminator.

The method of adding the (e) component to a polymerization solution of the (a) component, followed by mixing in a solution state includes a method comprising, for example, the following first to third steps. A necessary amount of (e) the extender oil is added to the polymerization solution containing an organic solvent, and mixed well in a solution state (first step) . Then, (i) clam is obtained by the steam stripping method of directly blowing steam into the polymerization solution containing (e) the extender oil, or (ii) the polymer solution containing the extender oil is directly desolvated by means such as an extruder or a devolatilizer to separate the oil-extended 1,2-polybutadiene from the solvent (second step). The resulting oil-extended 1,2-polybutadiene is dried with a vacuum drier, a hot air dryer, a roll or the like as needed (third step), hereby being able to isolate the desired (A) component.

Further, it is also possible to blend the (a) component and the (e) component in a molten state to prepare the (A) component. In this case, as a blending process, there is employed a single-screw extruder, a twin-screw extruder, a Banbury mixer, a roll, a kneader, a plastomill or the like, and the melt kneading temperature is suitably from 140 to 160°C.

### Oil-Extended 1,2-Polybutadiene Compositions

The (A) component of the invention may be used as the oil-extended 1,2-polybutadiene composition or the thermoplastic polymer composition (hereinafter also briefly referred to as the "composition") containing (C) the foaming agent in an amount of 1 to 300 parts by weight based on 100 parts by weight of the (A) component or based on 100 parts by weight of the total of the (A) component and the (B) component when the following (B) component is used.

### (C) Foaming Agents

As (C) the foaming agent, there can be used, for example, a known inorganic foaming agent or organic foaming agent, although it varies depending on the composition of the (A) component and the (B) component. Specific examples of the foaming agents include sodium bicarbonate, ammonium bicarbonate, sodium carbonate, ammonium carbonate, azodicarbonamide, dinitrosopentamethylenetetramine, dinitrosoterephthalamide, azobisisobutyronitrile, barium azodicarboxylate, sulfonylhydrazides such as toluenesulfonylhydrazide, and the like. Further, thermally expansive capsules known as Expancel (trade name) can also be used.

Azodicarbonamide, dinitrosopentamethylenetetramine and sulfonylhydrazides are more preferred among others.

These foaming agents may be used in combination with a known foaming agent such as urea or a urea derivative.

The compounding amount of the foaming agent is from 1 to 300 parts by weight, preferably from 2 to 300 parts by weight and more preferably from 3 to 50 parts by weight, based on 100 parts by weight of the (A) component or based on 100 parts by weight of the total of the (A) component and the (B) component when the following (B) component is used, although it varies depending on the kind of polymer of the forming material and the use of the formed article. When the amount of the foaming agent used is less than 1 part by weight, only a foam having low expansion ratio is obtained. On the other hand, when it exceeds 300 parts by weight, a gas generated by decomposition of the foaming agent is increased to extraordinarily elevate the gas pressure, which causes the generation of cracks in some cases.

Methods for foaming the (A) component of the invention or the composition thereof include a method of allowing carbon dioxide, water and the like to be contained in specific amounts, and obtaining a foam-formed article by various forming methods. For example, in the case of forming by ordinary injection molding, the composition containing carbon dioxide in an amount of about 0.5 part by weight based on 100 parts by weight of the (A) component or based on 100 parts by weight of the total of the (A) component and the (B) component when the following (B) component is used, is not foamed by high temperature and high pressure, when it is in a metering portion in a plasticized/molten state. However, when a mold is filled with it by injection molding, carbon dioxide contained is vaporized by a reduction in pressure, thereby being able to obtain a shaped article the inside of which is foamed.

The (A) component of the invention and the composition thereof may further contain (D) the crosslinking agent, (E) the softening agent and (F) at least one component selected from the group consisting of a filling agent, a bituminous material, a flame retardant, an antioxidant, an antiaging agent, a lubricant, a coloring agent, an ultraviolet absorber, an antistatic agent, a thermal stabilizer, a processing aid, a light (weather) -resisting agent, an antimicrobial agent and the like, excluding the above-mentioned (C) to (E) components.

### (D) Crosslinking Agents

In the invention, (D) the crosslinking agent includes a crosslinking agent and a crosslinking aid used as needed. Examples thereof include at least one selected from the group consisting of a combination of (D-1) sulfur or a compound generating sulfur by heating and a vulcanization accelerator, a combination of an organic oxide or an organic peroxide and a multifunctional monomer and a combination of a silanol compound and an aqueous agent, as well as a combination of a multifunctional monomer and electron beam irradiation, a combination of a photosensitizer and ultraviolet irradiation, a combination of a multifunctional monomer and a sensitizer, a combination of an organic peroxide and a sensitizer, and the like.

As sulfur, there can be used powdered sulfur, precipitated sulfur, colloidal sulfur, surface-treated sulfur and the like. Further, the compounds generating sulfur by heating include tetramethylthiuram disulfide (TMTD), tetraethylthiuram disulfide (TETD) and the like.

Further, the crosslinking aids (vulcanization accelerators) used in combination with sulfur or the compounds generating sulfur by heating include a sulfenamide-based compound, a guanidine-based compound, a thiuram-based compound and the like. For example, they are tetramethylthiuram disulfide (TMTD), N-oxydiethylene-2-benzothiazolylsulfenamide (OBS), N-cyclohexyl-2-benzothiazylsulfenamide (CBS), dibenzothiazyl disulfide (MBTS), 2-mercaptobenzothiazole (MBT), zinc di-n-butyldithiocarbamate (ZnBDC), zinc dimethylthiocarbamate (ZnMDC) and the like.

Here, the amount of the vulcanization accelerator used is usually from 0.1 to 300 parts by weight, and preferably from 0.5 to 200 parts by weight, based on 100 parts by weight of sulfur or the compound generating sulfur by heating.

As the organic peroxide, there can be used dicumyl peroxide, di-t-butylperoxy-3,3,5-trimethylcyclohexane, α,α'-di-t-butylperoxy-di-p-diisopropylbenzene, n-butyl-4,4-bis-t-butyl peroxyvalerate, t-butyl peroxybenzoate, t-butylperoxyisopropyl carbonate, 2,5-dimethyl-2,5-di-methyl-2,5-di(t-butylperoxy)hexane and the like.

Further, when the organic peroxide is used as the crosslinking agent, various multifunctional monomers and the like may be added at the same time. Specific examples of the multifunctional monomers are trimethylolpropane trimethacrylate, ethylene glycol dimethacrylate, triallyl isocyanate, diallyl phthalate and the like. The organic peroxide/multifunctional monomer (molar ratio) in this case is usually from 1/1 to 1/50, and preferably from 1/2 to 1/40.

When the combination of the silanol compound and the aqueous agent is employed, it has the operation and effect of water crosslinking. Here, the silanol compounds include vinylmethoxysilane, vinylethoxysilane, vinyltriacetoxysilane, vinyldimethoxymethylsilane, vinyldiethoxymethylsilane, vinylmethoxydimethylsilane, vinylethoxydimethylsilane and the like. These may be used either alone or as a mixture of two or more of them. Further, as the aqueous agent, there can be used water or water vapor.

A silanol condensation catalyst is preferably used in the combination of the silanol compound and the aqueous agent. As the silanol condensation catalyst, there is a metal salt of a carboxylic acid, an organic base, an inorganic acid, a metal salt of an organic acid and the like. Further, an organic peroxide is also used in combination with it as needed.

The silanol compound/aqueous agent (molar ratio) is usually from 1/0.01 to 1/ 100, and preferably from 1/0.05 to 1/90.

The amount of the silanol compound used is from 0.01 to 50 parts by weight based on 100 parts by weight of the (A) component or based on 100 parts by weight of the total of the (A) component and the (B) component when the following (B) component is used.

The above-mentioned multifunctional monomer can also be combined when the electron beam irradiation is carried out as a crosslinking means.

The amount of the multifunctional monomer used when the electron beam irradiation is carried out is from 0.01 to 50 parts by weight based on 100 parts by weight of the (A) component or based on 100 parts by weight of the total of the (A) component and the (B) component when the following (B) component is used.

As an electron beam apparatus used for electron crosslinking, there is used, for example, a scanning type (scan type) or a curtain type (linear cathode type or ion plasma type) . As the conditions of the electron beam irradiation, the processing capacity is from 2 to 3,000 Mrad·m/min, and the accelerating voltage is from 10 kV to 3,000 kV.

When the ultraviolet irradiation is carried out as the crosslinking means, the combination with the photosensitizer can provide efficient crosslinking. As the photosensitizer, preferred is one sensitized at 260 to 400 nm, the wavelength region of a high-pressure mercury lamp, and having affinity for the (A) oil-extended 1,2-polybutadiene or the (A) component and the (B) component when the following (B) component is used.

As specific examples of the photosensitizers, aromatic ketones such as benzophenone, p,p'-dimethoxybenzophenone, P,P'-dichlorobenzophenone, p,p'-dimethylbenzophenone, acetophenone and acetonaphthone give good results, and additionally, they also include an aromatic aldehyde such as terephthalaldehyde and a quinone such as methylquinone. The amount added is from 0.1 to 30 parts by weight, and preferably from 0.3 to 20 parts by weight, based on 100 parts by weight of the invention or the composition thereof. Further, the amount added when a sponge (foam) is prepared is from 0.1 to 3.0 parts by weight, and preferably from 0.3 to 1.0 part by weight. As the conditions of the electron beam irradiation, ultraviolet irradiation is carried out with a 1-kW high-pressure mercury lamp from a distance of 20 cm for 20 minutes.

When ultraviolet irradiation processing is carried out to produce the foam, the above-mentioned ultraviolet treatment is applied to a thin-layer sheet in which the foaming agent is previously contained in a specific amount, and the resulting thin-layer sheet is subjected to treatment at a temperature of 150 to 250°C

When the combination of the multifunctional monomer and the sensitizer or the combination of the organic peroxide and the sensitizer is used as (D) the crosslinking agent, the above-mentioned multifunctional monomers, organic peroxides and sensitizers can be appropriately used.

The amount of the above (D) component used is, for example, preferably from 0.001 to 50 parts by weight, more preferably from 0.01 to 40 parts by weight, still more preferably from 0.1 to 40 parts by weight, particularly preferably from 0.5 to 10 parts by weight and most preferably from 1 to 6 parts by weight, in terms of the compound weight, based on 100 parts by weight of the (A) component or based on 100 parts by weight of the total of the (A) component and the (B) component when the following (B) component is used. The (D) component is appropriately increased or decreased within this range to use depending on the combination with the vulcanization accelerator, the multifunctional monomer, the electron beam irradiation, the ultraviolet irradiation or the like. Less than 0.001 part by weight results in insufficient crosslinking with unsatisfied heat resistance, mechanical strength, compressive permanent set (compression set) and rigidity (vibration-damping properties and steel plate-reinforcing properties). On the other hand, exceeding 50 parts by weight results in deteriorated storage stability and excess crosslinking at the same time, which makes a crosslinked product brittle. Evaluation is therefore impossible, and the formed article can not be obtained.

The (A) component of the invention and the composition thereof can be used as a formed article, particularly a shoe sole material, even when (D) the crosslinking is not used. However, after the composition containing the (D) component is shaped, the above-mentioned crosslinking may be carried out as needed.

The following components may be further mixed with the (A) component of the invention and the composition thereof as needed.

### (E) Softening Agents

(E) The softening agent is an extender oil other than the (e) component used in the (A) component, and can be mixed with the (A) component of the invention or the composition thereof, separately. The extender oils include the same kind of extender oil as (e) the extender oil used in the (A) component. In this case, the amount of the (E) component compounded is preferably from 0 to 1,000 parts by weight, more preferably from 0 to 300 parts by weight, and particularly preferably from 1 to 100 parts by weight, based on 100 parts by weight of the (A) component or based on 100 parts by weight of the total of the (A) component and the (B) component when the following (B) component is used.

### (F) Components

The (F) component is at least one selected from the group consisting of a filling agent, a bituminous material, a flame retardant, an antioxidant, an antiaging agent, a lubricant, a coloring agent, an ultraviolet absorber, an antistatic agent, a thermal stabilizer, a processing aid, a light (weather)--resisting agent and an antimicrobial agent, excluding the above-mentioned (C) to (E) components.

The filling agents (reinforcing agents) include, for example, carbon black, silica, carbon-silica dual phase filler (dual phase filler: carbon-silica double phase filler), clay, calcium carbonate, magnesium carbonate, glass fiber, glass beads, potassium titanate, talc, mica, barium sulfate and the like. Calcium carbonate, the combined use of calcium carbonate and mica, the combined use of carbon black and silica, the use of carbon-silica dual phase filler or the combined use of carbon-silica dual phase filler and/or silica is preferred among others.

The amount of the filling agent compounded is usually from 0 to 1,000 parts by weight, preferably from 1 to 1,000 parts by weight, more preferably from 5 to 300 parts by weight, and particularly preferably from 5 t 200 parts by weight, based on 100 parts by weight of the (A) component or based on 100 parts by weight of the total of the (A) component and the (B) component when the following (B) component is used.

Calcium carbonate includes, for example, calcium carbonate heavy, calcium carbonate light and the like, and one having a particle size of 0.04 to 5 µm and a specific gravity of 2.5 to 2.8 is preferred.

The amount of calcium carbonate compounded is preferably from 2 to 1,000 parts by weight, and more preferably from 5 to 500 parts by weight, based on 100 parts by weight of the (A) component or based on 100 parts by weight of the total of the (A) component and the (B) component when the following (B) component is used.

As the carbon black, preferred is carbon blackmanufactured by the furnace process and having a nitrogen adsorption specific surface area of 50 to 200 m²/g and a DBP oil absorption of 80 to 200 ml/100 g, and examples thereof include one of the FEF class, the HAF class, the ISAF class, the SAF class or the like. One of a high aggregation type is preferred among others.

Amount of the carbon black compounded is preferably from 2 to 1,000 parts by weight, and more preferably from 5 to 500 parts by weight, based on 100 parts by weight of the (A) component or based on 100 parts by weight of the total of the (A) component and the (B) component when the following (B) component is used.

The silica includes, for example, wet process silica, dry process silica, synthetic silicate-based silica and the like. High in reinforcing effect is silica having small particle size. One of a small particle size and high aggregation type (high surface area, high oil absorption) is good in dispersibility in the polymer, so that it is preferred in respect to physical properties and processability. The average particle size of the silica is preferably from 5 to 60 µm, and more preferably from 10 to 35 µm, by the primary particle size. Further, the specific surface area (BET method) thereof is preferably from 45 to 280 m²/g.

The amount of the silica compounded is preferably from 2 to 1,000 parts by weight, and more preferably from 10 to 500 parts by weight, based on 100 parts by weight of the (A) component or based on 100 parts by weight of the total of the (A) component and the (B) component when the following (B) component is used.

Further, it is also possible to compound the carbon black and the silica together to use in combination. In that case, the amount compounded is preferably from 2 to 1,000 parts by weight, and more preferably from 10 to 500 parts by weight, as the total amount of the carbon black and the silica, based on 100 parts by weight of the (A) component or based on 100 parts by weight of the total of the (A) component and the (B) component when the following (B) component is used.

The above-mentioned carbon black and silica are mixed with the oil-extended 1,2-polybutadiene of the invention within the above-mentioned range, whereby these filling agents having a reinforcing function can be uniformly finely dispersed in the polymer to give excellent roll processability and extrusion properties, to improve the mechanical strength of the formed article and to provide one excellent in wear resistance.

Further, the carbon-silica dual phase filler can be mixed with the (A) composition of the invention or the composition thereof, either alone or together with the carbon black and/or the silica. The compounding of the carbon-silica dual phase filler provides excellent advantages similar to those obtained when the carbon black and the silica are used in combination therewith, even when it is used alone. The carbon-silica dual phase filler is so-called silica coating carbon black in which silica is chemically bonded to the surface of carbon black. Specific examples thereof include CRX2000, CRX2002 and CRX2006 (trade name) manufactured by Cabot Corporation. The amount of the carbon-silica dual phase filler compounded is preferably from 2 to 1,000 parts by weight, and more preferably from 10 to 500 parts by weight, based on 100 parts by weight of the (A) component or based on 100 parts by weight of the total of the (A) component and the (B) component when the following (B) component is used.

Further, the carbon-silica dual phase filler can be used in combination with a filling agent other than that. There is no particular limitation on the filling agent which is simultaneously usable, and examples thereof include the above-mentioned carbon black and/or silica, clay, calcium carbonate, magnesium carbonate and the like. The carbon black and/or silica is preferred among others. The amount of the filling agent which is simultaneously usable, together with the carbon-silica dual phase filler, is preferably from 2 to 1,000 parts by weight, and more preferably from 10 to 500 parts by weight, based on 100 parts by weight of the (A) component or based on 100 parts by weight of the total of the (A) component and the (B) component when the following (B) component is used.

When the silica is mixed as the above-mentioned filling agent, and when the carbon-silica dual phase filler is mixed, a silane coupling agent is preferably mixed. The amount thereof compounded is preferably from 1 to 20 parts by weight, and more preferably from 5 to 15 parts by weight, based on 100 parts by weight of the silica and/or the carbon-silica dual phase filler.

As the silane coupling agent, preferred is one having both a functional group reactable with the silica surface such as an alkoxyl group and a functional group reactable with a carbon-carbon double bond of the polymer such as a polysulfide, a mercapto group or an epoxy group, in its molecule. Examples thereof include bis-(3-triethoxysilylpropyl)tetrasulfide, bis-(2-triethoxysilylethyl)tetrasulfide, 3-mercaptopropyl-trimethoxysilane, 3-triethoxysilylpropyl-N,N-dimethylthio-carbamoyltetrasulfide, 3-triethoxysilylpropylbenzothiazole-tetrasulfide and the like. The use of such a silane coupling agent can enhance its reinforcing effect, when the carbon black and the silica are used simultaneously as the filling agent, or when the carbon-silica dual phase filler is used as the filling agent.

The bituminous materials usable in the invention include straight asphalt frequently used for automobile damping materials, blown asphalt and a compound thereof with an inorganic material.

As the active agent usable in the invention, preferred is zinc oxide, magnesium oxide, zinc stearate, triethanolamine, an organic amine, ethylene glycol or diethylene glycol.

The flame retardants usable in the invention include a halogen flame retardant, a phosphorus flame retardant and an inorganic flame retardant. However, considering the dioxin problem, a phosphorus flame retardant and an inorganic flame retardant containing no halogen are preferred.

As the phosphorus flame retardants, there can be exemplified triphenyl phosphate, tricresyl phosphate, trixylenyl phosphate, cresylphenyl phosphate, xylenyldiphenyl phosphate, resorcinol-bis-(diphenyl phosphate), 2-ethylhexyl diphenylphosphate, dimethyl methylphosphate, triallyl phosphate and the like, and condensation products thereof, ammonium phosphate and condensation products thereof, diethyl N,N-bis(2-hydroxyethyl) aminomethylphosphonate and the like.

As the inorganic flame retardants, there can be exemplified magnesium hydroxide, aluminum hydroxide, zinc borate, barium borate, kaolin clay, calcium carbonate, alunite, basic magnesium carbonate, calcium hydroxide, antimony trioxide and the like.

The above-mentioned flame retardants include a so-called flame retarding aid which is low in flame retardance-exhibiting effect of itself, but synergistically exhibits more excellent effect by using in combination with another flame retardant.

In the composition of the invention, it is possible to prolong product life by the use of the antioxidant. Although the antioxidants used in this case include a phenolic antioxidant, a sulfur antioxidant, an amine antioxidant and the like, a phenolic antioxidant is particularly preferred.

Specific examples of the above-mentioned phenolic antioxidants include styrenated phenol, 2,6-di-t-butyl-4-methylphenol, 2,6-di-t-butyl-p-ethylphenol, 2,4,6-tri-t-butylphenol, butylhydroxyanisole, 1-hydroxy-3-methyl-4-iso-propylbenzene, mono-t-butyl-p-cresol, mono-t-butyl-m-cresol, 2,4-dimethyl-6-t-butylphenol, butyrated bisphenol A, 2,2'-methylene-bis-(4-methyl-6-t-butylphenol), 2,2'-methylene-bis-(4-ethyl-6-t-butylphenol), 2,2'-methylene-bis(4-methyl-6-t-nonylphenol), 2,2'-isobutylidene-bis(4,6-dimethylphenol), 4,4'-butylidene-bis(3-methyl-6-t-butylphenol), 4,4'-methylene-bis-(2,6-di-t-butylphenol), 2,2-thio-bis-(4-methyl-6-t-butylphenol), 4,4'-thio-bis-(3-methyl-6-t-butylphenol), 4,4'-thio-bis-(2-methyl-6-t-butylphenol), 4,4'-thio-bis-(6-t-butyl-3-methylphenol), bis(3-methyl-4-hydroxy-5-t-butylbenzene)sulfide, 2,2-thio[diethyl-bis-3-(3,5-di-t-butyl-4-hydroxyphenol) propionate, bis[3,3-bis(4'-hydroxy-3'-t-butylphenol)butyric acid] glycol ester, bis[2-(2-hydroxy-5-methyl-3-t-butylbenzene)-4-methyl-6-t-butylphenyl] terephthalate, 1,3,5-tris(3',5'-di-t-butyl-4'-hydroxybenzyl) isocyanurate, N,N'-hexamethylene-bis(3,5-di-t-butyl-4-hydroxy-hydroxyamide), N-octadecyl-3-(4'-hydroxy-3',5'-di-t-butylphenol) propionate, tetrakis[methylene-(3',5'-di-t-butyl-4-hydroxyphenyl) propionate]methane, 1,1'-bis(4-hydroxyphenyl)cyclohexane, mono(α-methylbenzene)phenol, di(α-methylbenzyl)phenol, tri(α-methylbenzyl)phenol, bis(2'-hydroxy-3'-t-butyl-5'-methylbenzyl)4-methyl-phenol, 2,5-di-t-amylhydroquinone, 2,6-di-butyl-α-dimethylamino-p-cresol, 2,5-di-t-butylhydroquinone, diethyl ester of 3,5-di-t-butyl-4-hydroxybenzylphosphoric acid and the like.

These antioxidants can be used either alone or as a combination of two or more of them. The amount of the antioxidant compounded is preferably from 0.1 to 10 parts by weight, and particularly preferably from 0.2 to 5 parts by weight, based on 100 parts by weight of the (A) component or based on 100 parts by weight of the total of the (A) component and the (B) component when the following (B) component is used.

The lubricants usable in the invention include a paraffinic and hydrocarbon resins generally used for imparting extrusion stability, a metal soap, a fatty acid represented by stearic acid, a fatty acid amide, a fatty acid ester, an aliphatic metal salt and the like.

The coloring agent can be appropriately selected from known inorganic pigments and organic pigment to use. Examples thereof include carbon black, titanium oxide, red iron oxide, cobalt blue, cadmium yellow and the like.

The ultraviolet absorbers include a salicylic acid derivative such as phenyl salicilate, a benzophenone compound such as 2,4-dihydroxybenzophenone, a benzotriazole compound such as 2-(2'-hydroxy-5'-methyl-phenyl)benzotriazole, and the like.

The antistatic agents include a cationic active agent, an anionic active agent, a nonionic active agent and the like.

The antiaging agents include a naphthylamine compound, a diphenylamine compound, a p-phenylenediamine compound, a quinoline compound, a hydroquinone derivative, a monophenolic compound, a bis-, tris- and polyphenolic compounds, a thiobisphenolic compound, hindered phenolic compound, a phosphite compound and the like.

Although there is no particular limitation on the compounding ratio of the above (F) component, the (F) component excluding the filling agent is usually from 0 to 300 parts by weight, preferably from 1 to 300 parts by weight, more preferably from 1 to 200 parts by weight, still more preferably from 0 to 80 parts by weight, particularly preferably from 0 to 20 parts by weight, and most preferably from 1 to 15 parts by weight, based on 100 parts by weight of the (A) component or based on 100 parts by weight of the total of the (A) component and the (B) component when the following (B) component is used.

Further, the total amount of (E) the softening agent and the (F) component is preferably from 0. 0001 to 600 parts by weight, more preferably from 0.001 to 500 parts by weight, and particularly preferably from 0.001 to 100 parts by weight, based on 100 parts by weight of the (A) component or based on 100 parts by weight of the total of the (A) component and the (B) component when the following (B) component is used.

Known additives other than the above-mentioned (B) to (F) components can be appropriately added to the composition of the invention.

### Thermoplastic Polymer Compositions

With (A) the oil-extended 1,2-polybutadiene of the invention, (B) at least one selected from the group consisting of a thermoplastic resin, a thermoplastic elastomer, a natural rubber and a synthetic rubber other than the above-mentioned (A) component (hereinafter also referred to as "another (co)polymer") and various compounding agents are mixed, thereby being able to obtain a thermoplastic resin composition. The polymer composition prepared is formed to a desired shape, and then, subjected to crosslinking (curing) treatment to be able to obtain a formed article.

The thermoplastic resin used as the (B) component can be used without particular limitation, as long as it is a thermoplastic resin having a plasticizing temperature of 50 to 450°C. Examples thereof include one kind alone or a mixture of two or more of non-oil-extended polybutadiene, a styrenic resin (for example, polystyrene, a butadiene-styrene copolymer, an acrylonitrile-styrene copolymer, an acrylonitrile-butadiene-styrene copolymer or the like), an ABS resin, an AES resin, an AAS resin, an olefinic resin, an ethylene-ethyl acrylate resin, polyvinyl chloride, polyvinylidene chloride, a polycarbonate, a polyacetal, polyphenylene oxide, polymethyl methacrylate, a saturated polyester resin (for example, a hydroxycarboxylic acid condensation product such as polylactic acid, a condensation product of a diol and a dicarboxylic acid such as polybutylene succinate, or the like), a polyamide resin, a fluororesin, polysulfone, polyethersulfone, polyarylate, polyetheretherketone, a liquid crystal polymer and the like.

The above-mentioned olefinic resin is a resin obtained by (co)polymerizing an aliphatic unsaturated hydrocarbon monomer. Examples thereof include a polypropylene (PP) resin such as a propylene homopolymer, a propylene block copolymer or a propylene random copolymer, a 4-methyl-1-pentene polymer, a polyethylene (PE) resin such as an ethylene homopolymer, low-density polyethylene, linear low-density polyethylene (LLDPE) or high-density polyethylene, and the like. Preferably, polypropylene is used. These olefinic resins can be used either alone or as a mixture of two or more of them.

The melt flow rate (MFR) (conditions: 230°C, 2.16 kg) of the olefinic resin is preferably from 01 to 60 g/10 minutes. Less than 0.1 g/10 minutes results in poor processability, whereas exceeding 60 g/10 minutes results in poor mechanical strength of the resulting composition.

Of the thermoplastic resins, preferred are polystyrene, a butadiene-styrene copolymer, an acrylonitrile-styrene copolymer, an ABS resin, an AES resin, an AAS resin, an olefinic resin, polyvinyl chloride, a saturated polyester resin and a polyamide resin.

Further, the thermoplastic elastomers include, for example, according to the classification by the chemical composition of hard segments, a styrenic thermoplastic elastomer (referred to as SBC for brevity, hereinafter, symbols in parentheses indicates abbreviation), an olefinic thermoplastic elastomer (TPO), a urethanic thermoplastic elastomer (TPU), an esteric thermoplastic elastomer (TPEE), an amidic thermoplastic elastomer (TPAE) and the like. In addition, there are vinyl chloride-based thermoplastic elastomer (TPVC), ion cluster type thermoplastic elastomer (ionomer), a fluorine thermoplastic elastomer containing a fluorine resin as a restricting block, and the like. Of the thermoplastic elastomers by resin/rubber blending, TPO by dynamic crosslinking is called TPV in some cases in which a rubber component acting as a soft segment is kneaded while crosslinking to reduce the size of dispersed rubber particles, thereby improving the performances. These thermoplastic elastomers include only one kind of them or a mixture of tow or more of them.

Preferred as SBC is a styrene-butadiene-styrene block copolymer (SBS), a styrene-isoprene-styrene block copolymer (SIS), a styrene-isoprene-butadiene block copolymer (SIB), a styrene-ethylene·butylene-styrene block copolymer (SEBS), a functional group-imparting type SEBS (f-SEBS), a styrene-ethylene·propylene-styrene block copolymer (SEPS) or a hydrogen addition type styrene·butadiene polymer (HSBR) of a random type.

Preferred examples of TPO include simple blend type TPO of polyolefins such as PP and PE (s-TPO), reactor made (i-TPO), dynamic curing type TPO (TPV) and the following olefinic rubber.

s-TPO is one obtained by mixing elastomers such as an ethylene-propylene copolymer (EPM), an ethylene-propylene-diene copolymer (EPDM), an ethylene-butadiene-methylene copolymer (EBM) and an ethylene-butadiene-diene-methylene copolymer (EBDM), and compounding the mixture with a mixer such as a Banbury or a plastomill. i-TPO is one obtained by polymerizing an olefin monomer, a hard segment, and then, polymerizing an olefin monomer, a soft segment, in the same plant or the same reactor vessel (the order of polymerization may be reversed).

TPV is one prepared by curing the rubber concurrently with mixing with a mixer such as a Banbury or a plastomill. Preferred as TPV is PP-EPDM (hereinafter, the description on the left indicates a hard segment, and the description on the right indicates a soft segment) in which PP as a hard segment and EPDM as a soft segment are combined, PP-nitrile rubber (NBR), PP-acrylic rubber (ACM), PP-natural rubber (NR), PP-butyl rubber (IIR), PE-EPDM, PE-NR, nylon-NBR, nylon-ACM, polyester-chloroprene (CR) and PVC-NBR.

The olefinic rubbers include, for example, an ethylenic copolymer composed of ethylene, an α-olefin having 3 to 20 carbon atoms and a non-conjugated polyene, in which the molar ratio of ethylene to the α-olefin (ethylene/α-olefin) is from 40/60 to 93/7, and the iodine value of the non-conjugated polyene is with in the range of 10 to 40.

The α-olefins having 3 to 20 carbon atoms used herein include, for example, propylene,1-butene, 1-pentene, 1-hexene, 1-heptene, 1-octene, 1-decene and the like. Preferably, propylene, 1-butene, 1-hexene, and 1-octene are used, and more preferably, propylene and 1-butene are used. These α-olefins can be used either alone or as a mixture of two or more of them.

The molar ratio of ethylene to the α-olefin (ethylene/α-olefin) ranges from 40/60 to 93/7, preferably from 50/50 to 85/15, and more preferably from 60/40 to 80/20. Amolar ratio within the above-mentioned range suitably maintains mechanical strength and permanent compressive strain in a balanced manner.

Further, the non-conjugated polyenes constituting the olefinic rubbers include, for example, a cyclic polyene such as 5-ethylidene-2-norbornene, dicyclopentadiene, 5-propylidene-2-norbornene, 5-vinyl-2-norbornene, 2,5-norbornadiene, 1,4-cyclohexadiene, 1,4-cyclooctadiene or 1,5-cyclooctadiene, a chain polyene having 6 to 15 carbon atoms and an internal unsaturated bond such as 1,4-hexadiene, 4-methyl-1,4-hexadiene, 5-methyl-1,4-hexadiene, 5-methyl-1,5-heptadiene, 6-methyl-1,5-heptadiene, 6-methyl-1,6-octadiene, 7-methyl-1,6-octadiene, 5,7-dimethyl-1,6-octadiene, 7-methyl-1,7-nonadiene, 8-methyl-1,7-nonadiene, 8-methyl-1,8-decadiene, 9-methyl-1,8-decadiene, 4-ethylidene-1,6-octadiene, 7-methyl-4-ethylidene-1,6-octadiene, 7-methyl-4-ethylidene-1,6-nonadiene, 7-ethyl-4-ethylidene-1,6-nonadiene, 6,7-dimethyl-4-ethylidene-i, 6-octadiene and 6,7-dimethyl-4-ethylidene-1,6-nonadiene, and an α, ω-diene such as 1, 5-hexadiene, 1,6-heptadiene, 1,7-octadiene, 1,8-nonadiene, 1,9-decadiene, 1,10-undecadiene, 1,11-dodecadiene, 1,12-tridecadiene and 1,13-tetradecadiene, and preferably include 5-ethylidene-2-norbornene, dicyclopentadiene, 5-vinyl-2-norbornene, 7-methyl-1,6-octadiene and 5-methyl-1,4-hexadiene. More preferably, 5-ethylidene-2-norbornene, dicyclopentadiene and 5-vinyl-2-norbornene are used. these non-conjugated polyenes can be used either alone or as a mixture of two or more of them.

The iodine value of the non-conjugated polyene ranges from 10 to 40, and preferably from 20 to 35. In this case, when the iodine value is less than 10, the mechanical strength of the resulting formed article is poor. On the other hand, exceeding 40 results in impairment of the rubber elasticity of the resulting formed article.

The Mooney viscosity (ML₁₊₄, 100°C) of the olefinic rubber is preferably within the range of 25 to 350, and more preferably within the range of 40 to 300. When the Mooney viscosity is less than 25, the mechanical strength of the resulting formed article tends to decrease. On the other hand, exceeding 350 results in poor processing characteristics of the resulting composition.

The above-mentioned olefinic rubber can be produced by appropriate processes such as a vapor phase polymerization process, a solution polymerization process and a slurry polymerization process. These operations can be conducted either in a batch system or in a continuous system

In the above-mentioned solution polymerization process or slurry polymerization process, an inactive hydrocarbon is ordinarily used as a reaction solvent.

Such inactive hydrocarbons include, for example, an aliphatic hydrocarbon such as n-pentane, n-hexane, n-heptane, n-octane, n-decane or n-dodecane; an alicyclic hydrocarbon such as cyclohexane or methylcyclohexane; an aromatic hydrocarbon such as benzene, toluene or xylene; and the like. These hydrocarbon solvents can be used either alone or as a mixture of two or more of them. Further, it is also possible to use a raw material monomer as the hydrocarbon solvent.

Polymerization catalysts used in producing the above-mentioned olefinic rubbers include, for example, anolefin polymerization catalyst comprising a compound of a transition metal selected from V, Ti, Zr and Hf and an organic metal compound. The above-mentioned transition metal compounds and organic metal compounds can each be used either alone or as a mixture of two or more of them.

Particularly preferred examples of such olefin polymerization catalysts include a metallocene catalyst comprising a metallocene compound and an organic aluminum compound or an ionic compound reacting with a metallocene compound to form an ionic complex, or a Ziegler-Natta catalyst comprising a vanadium compound and an organic aluminum compound.

As TPU, preferred is one in which a diisocyanate used as a hard segment is at least one selected from the group consisting of toluene diisocyanate, 4,4'-diphenylmethane diisocyanate, 1,6-hexamethylene diisocyanate, 2,2,4 (2,4,4)-trimethyl-hexamethylene diisocyanate, p-phenylene diisocyanate, 4,4'-dicyclohexylmethane diisocyanate, 3,3'-dimethyl-diphenyl-4,4'-diisocyanate, 1,5'-naphthalene diisocyanate, trans-1,4-cyclohexyl diisocyanate and lysine diisocyanate.

As TPEE, preferred is polyester·polyether type TPEE in which a hard segment is an aromatic crystalline polyester and a polyether is used as a soft segment, polyester.polyester type TPEE in which a hard segment is an aromatic crystalline polyester and an aliphatic polyester is used as a soft segment, or liquid crystalline TPEE in which a hard segment is a liquid crystal molecule and a soft segment is an aliphatic polyester. As polyester·polyether type TPEE, more preferred is one in which a hard segment is any one of a condensation product of butanediol and dimethyl terephthalate, a condensation product of ethylene glycol and dimethyl terephthalate, a condensation product of butanediol and 2,6-naphthalenedicarboxylic acid and a condensation product of ethylene glycol and 2,6-naphthalenedicarboxylic acid or a mixture thereof, and a soft segment is any one of polytetramethylene ether glycol, poly(1,2-propylene oxide) glycol and poly(ethylene oxide) glycol, or a mixture thereof. As polyester·polyester type TPEE, more preferred is one in which a hard segment is the same as with polyester·polyether type TPEE, but a soft segment is an aliphatic polyester of a polylactone type.

Further, as liquid crystalline TPEE, preferred is a multi-block copolymer in which a hard segment is a thermotropic liquid crystal polymer, particularly using a low-molecular liquid crystal compound such as dihydroxy-para quarter-phenyl, and an aliphatic polyester is used as a soft segment.

As TPAE, preferred is a multiblock copolymer in which a hard segment is a polyamide, and a polyether or polyester having low Tg is used as a soft segment. More preferably, the hard segment is nylon-6, nylon-6,6, nylon-6,10, nylon-11 or nylon-12, and the soft segment is a polyether diol or a polyester diol. Particularly preferably, the soft segment is diol poly(oxytetramethylene) glycol, poly(oxypropylene) glycol, poly(ethylene adipate) glycol or poly(butylene-1,4-adipate) glycol.

As TPVC, preferred is one kind alone or a mixture of two or more of one in which polyvinyl chloride (hereinafter referred to as PVC for brevity) having high molecular weight is used as a hard segment to allow it to have the action of a crosslinking point at a microcrystal portion and PVC plasticized with a plasticizer is used as a soft segment, one in which partial crosslinking- or branched structure-introduced PVC is used as a hard segment and PVC plasticized with a plasticizer is used as a soft segment, and one in which PVC is used as a hard segment and a rubber such as partially crosslinked NBR and/or TPE such as TPU or TPEE is used as a soft segment.

Further, the natural rubber (NR) can be used without particular limitation, and examples thereof include one kind alone or a mixture of two or more of gum arabic, Indian gum and the like.

Still further, the synthetic rubber can be used without particular limitation, and examples thereof include one kind alone or a mixture of two or more of cis-1,4-polybutadiene, trans-1, 4-polybutadiene, a conjugated diolefin-vinyl aromatic compound copolymer other than the (a) component, low- to high-vinyl polybutadiene (1,2-vinyl bond content: 10 to 90%), cis-1,4-polyisoprene, 3,4-polyisoprene, an acrylonitrile/butadiene copolymer, chloroprene rubber, isobutylene-isoprene rubber, an ethylene-α-olefin-(diene) copolymer (for example, EPM (ethylene propylene copolymer), EBM, EOM, EPDM, EBDM or the like), an aromatic vinyl compound-conjugated diene compound-(α-olefin) copolymer (for example, styrenebutadiene-rubber (SBR), SBS, SEBS or the like), acrylonitrile-butadiene rubber, fluororubber, silicone rubber, halogenated butyl rubber (for example, chlorinated butyl rubber, brominated butyl rubber or the like), liquid butadiene rubber, liquid acrylonitrile-butadiene rubber and the like.

The above-mentioned (B) components can be used either alone or as a mixture of two or more of them.

The Mooney viscosity (ML₁₊₄, 100°C) of the (B) component is preferably from 20 to 200, and more preferably from 25 to 150. The use of the above-mentioned (B) component within the above-mentioned Mooney viscosity range makes it possible to produce the polymer composition of the invention at low cost without substantially impairing the performances of the (A) component of the invention.

As for the compounding ratio of (A) the oil-extended 1,2-polybutadiene and the (B) component in the polymer composition of the invention, the (A) component is from 1 to 99 parts by weight, preferably from 5 to 95 parts by weight, and more preferably from 10 to 90 parts by weigh, and the (B) component is from 99 to 1 parts by weight, preferably from 95 to 5 parts by weight, and more preferably from 90 to 10 parts by weight [with the proviso that (A) + (B) = 100 parts by weight] . The use of such a (B) component within the above-mentioned range can provide the polymer composition of the invention excellent in heat resistance, tensile strength and compression set, the resin layer for a laminate and the clearance-filling resin layer excellent in vibration-damping properties, steel plate-reinforcing properties, sound insulating properties and sealing properties, and the like.

When the olefinic resin and the olefinic rubber are used as the (B) component, as for the compounding ratio of the (A) component, the olefinic resin and the olefinic rubber, the (A) component/olefinic resin/olefinic rubber is preferably 5 to 90% by weight/5 to 60% by weight/5 to 90% by weight, more preferably 5 to 50% by weight/10 to 50% by weight/20 to 80% by weight, and particularly preferably 5 to 30% by weight/15 to 50% by weight/50 to 80% by weight, taking the total as 100% by weight. When the (A) component exceeds 90% by weight, the mechanical strength is deteriorated. On the other hand, less than 5% by weight also unfavorably results in poor mechanical strength. Further, when the amount of the olefinic resin is more than 60% by weight, the processability of the resulting composition. On the other hand, less than 5% by weight results in lowered mechanical strength of the resulting formed article. Furthermore, when the amount of the olefinic rubber exceeds 90% by weight, the processability of the resulting composition is unfavorably deteriorated. On the other hand, less than 5% by weight results in poor flexibility of the resulting composition.

Further, when the olefinic resin and/or the olefinic rubber is used as the (B) component, the content of other (co)polymers except the (A) component, the olefinic resin and the olefinic rubber is preferably 30 parts by weight or less, and more preferably about 20 parts by weight or less, based on 100 parts by weight of the total of the (A) component, the olefinic resin and the olefinic rubber.

Furthermore, when the polymer composition is used as the shoe sole material, as for the compounding ratio of the (A) component and the (B) component, the (A) component is from 1 to 99 parts by weight, preferably from 2 to 50 parts by weight, and more preferably from 3 to 30 parts by weigh, and the (B) component is from 99 to 1 parts by weight, preferably from 98 to 50 parts by weight, and more preferably from 97 to 70 parts by weight [with the proviso that (A) + (B) = 100 parts by weight] . The use of the (A) component within the above-mentioned range can provide the polymer composition of the invention excellent in processability, formability, coloring properties (high distinctness of image), forming appearance, flexibility, wear resistance, lightness in weight and mechanical strength characteristics.

The (A) compound of the invention and the composition thereof are excellent in processability, formability, coloring properties and fluidity, so that it is possible to smoothly fill the inside of a mold with the composition using an injection molding machine or a transfer molding machine. Moreover, a crosslinked foam obtained by heating the mold is high in expansion ratio and has a uniform and fine foam structure.

Such a crosslinked foam is low in shrinkage after crosslinking and foaming, and excellent in mechanical strength (TB, EB), interlayer tear strength, compressive permanent set and wet skid resistance. Accordingly, the crosslinked foam obtained from the polymer composition of the invention is suitably used as a shoe sole material.

Further, the crosslinked foam of the invention is excellent in dimensional accuracy and also excellent in durability and cushioning properties, so that it can also be applied to a thermoformed sponge. The thermoformed sponge as used herein is one prepared by previously cutting the foam to a desired shape, heating and pressurizing it in a mold heated at a temperature equal to or higher than the melting temperature of the (A) component or the (A) component and the (B) component, preferably at 100 to 150°C, to form a firm melt coating on an outer surface of the foam, then, cooling the mold and taken out the foam.

The thermoplastic polymer composition of the invention may further contain (D) the crosslinking agent, in addition to the above (A) and (B) components, as needed. (D) the crosslinking agent includes a crosslinking agent and a crosslinking aid used as needed, similarly to the above. For example, it may be prepared by compounding at least one selected from the group consisting of a combination of (D-1) the above-mentioned sulfur or compound generating sulfur by heating and a vulcanization accelerator, a combination of an organic peroxide or an organic peroxide and a multifunctional monomer and a combination of a silanol compound and an aqueous agent, as well as a combination of a multifunctional monomer and electron beam irradiation, a combination of a photosensitizer and ultraviolet irradiation, a combination of a multifunctional monomer and a sensitizer, a combination of an organic peroxide and a sensitizer, and the like. The thermoplastic polymer composition of the invention prepared can be formed to a desired shape.

The thermoplastic polymer composition of the invention may further contain (C) the foaming agent, (E) the softening agent and (F) at least one component selected from the group consisting of a filling agent, a bituminous material, an active agent, a flame retardant, an antioxidant, an antiaging agent, a lubricant, a coloring agent, an ultraviolet absorber, an antistatic agent, a thermal stabilizer, a processing aid, a light (weather) -resisting agent and an antimicrobial agent, excluding the above-mentioned (C) to (E) components, other additives and the like, as well as the above-mentioned (A) and (B) components and the (D) component used as needed.

In preparing the composition of the invention, a Banbury mixer, a kneader such as mixing roll, an extruder, a crosslinking (curing) apparatus and the like which have hitherto been known can be used.

The composition of the invention can be prepared by kneading the (A) component and the (B) component, (C) the foaming agent, (E) the softening agent, the (F) component and the like which are used as needed, at a temperature of 140 to 180°C with a kneader. After the mixture obtained by kneading is cooled, (D) the crosslinking agent is further mixed using a Banbury mixer or a mixing roll. The resulting mixture is formed to a specified shape, and then, crosslinked (cured) at a temperature of 14 to 180°C, therebybeingabletoproduceacrosslinked (cured) product having an arbitrary shape, that is to say, a formed article.

Further, examples thereof include but are not limited to a method of previously melt blending the (A) component or the (A) component and the (B) component usually at 50 to 120°C, preferably at 60 to 100°C, using an extruder, a Banbury mixer or the like, mixing (E) the softening agent, (F) the filling agent and the like therewith using a Banbury mixer or the like, and then, adding (C) the foaming agent, (D) the crosslinking agent and the like.

The composition of the invention is formed to the formed article by injection molding, press molding, extrusion molding such as sheet extrusion or profile extrusion, blow molding, rotational molding, slushmolding, powder slushmolding, dipping molding or the like.

The crosslinked formed article which is crosslinked (cured) and foamed can be produced, for example, by a technique of placing the formed article composed of the (A) component of the invention or the composition thereof in a mold, and elevating the temperature thereof to conduct crosslinking (curing) and foaming, or forming the non-crosslinked composition of the invention to an arbitrary shape (for example, a sheet shape) using a calender roll, an extrusion molding machine or the like, and then, heating it in a heating (curing) tank to conduct crosslinking (curing) and foaming, after the above-mentioned molding, such a technique being applied to the ordinary production of crosslinked (cured) rubber.

For crosslinking (curing) and foaming conditions in this case, the heating temperature is from 130 to 300°C, and from 150 to 200°C, and the heating time is from 3 to 120 minutes, and preferably from 5 to 60 minutes. In the case of the foamed formed article, the density thereof is usually from 0.1 to 1.1 Mg/m³, and preferably from 0.1 to 0.9 Mg/m³.

Further, there is also no particular limitation on the method for preparing the composition for forming the shoe sole material of the invention, and a mixing method using a kneader used for general rubber compounding such as a Banbury type mixer, a pressure kneader or an open roll may be used. The kneading is preferably carried out at a temperature ranging from 70 to 130°C.

Injection molding or transfer molding is usually employed for the forming of the composition for the shoe sole material. There is no particular limitation on the shape of the composition supplied to an injection molding machine or a transfer molding machine, and it may be a shape suitable for a molding machine used, such as a ribbon-like shape, a square pellet-like shape or a round pellet-like shape.

There is no particular limitation on the forming machine for the forming of the composition for the shoe sole material. For example, an injection molding machine or a transfer molding machine used for thermoplastic resins or rubber is used in which each portion of a cylinder, a nozzle and mold is equipped with a temperature controller. Although the temperature conditions of these molding machines vary depending on the composition, usually, it is preferred that the cylinder portion is set to 70 to 100°C, the nozzle portion to 80 to 120°C, and the mold portion to 140 to 200°C.

Crosslinking and foaming for obtaining the shoe sole material proceeds by heating the mold portion in the temperature range described above for 3 to 10 minutes, thereby decomposing the foaming agent in the mold having a specified shape to develop a gas and crosslinking the composition. It is necessary that the mold clamping pressure of the mold is higher than the expansion pressure of the gas developed by decomposition of the foaming agent. Usually, the specific pressure applied to a cavity of the mold is preferably 7 MPa or more. When the specific pressure is low, the air bubble diameter of the formed article increases, and a fin is produced on the foam, resulting in poor appearance. After heating and pressurizing for a given period of time, the mold is opened, and the crosslinked foam, a product, is obtained. In the case of the foamed formed article (foamed shoe sole material), the density thereof is usually from 0.1 to 1.1 Mg/m³, and preferably from 0.1 to 0.9 Mg/m³.

### Master Batch

The oil-extended 1,2-polybutadiene composition of the invention can be produced using a master batch containing 2 to 95% by weight of the (A) component and 98 to 5% by weight of (G) a functional compound for rubber or plastics [with the proviso that (A)+(G) = 100% by weight].

Further, the thermoplastic polymer composition of the invention can be produced using a master batch containing 2 to 95% by weight of the total of the (A) component and the (B) component and 98 to 5% by weight of the (G) component [with the proviso that (A)+(B)+(G) = 100% by weight].

(G) the functional compound of the above-mentioned master batch may be (C) the foaming agent, (D) the crosslinking agent, (E) the softening agent or the (F) component described above, or another known additive.

When the master batch is used, (C) the foaming agents include azodicarbonamide, dinitrosopentamethylenetetramine and p,p'-oxybisbenzenesulfonylhydrazine.

The master batch of the invention containing (D) the crosslinking agent is preferably, for example, a master batch containing only one kind of (D) crosslinking agent such as sulfur alone or the vulcanization accelerator alone. However, when no change in quality occurs in the production and storage, it may be a master batch containing two or more kinds of (D) crosslinking agents for simplification.

As the type of usage at the time when the master batch is used, the (G) component can be sealed in a packaging material such as a sheet or a film composed of the (A) component or the (A) and (B) components and also used as the master batch of the invention.

(G) the functional compounds described above can be used either alone or as a combination of two or more of them. However, a combination of two or more kinds of compounds so as to react with each other or to change in quality under production conditions and ordinary storage conditions of the master batch is unfavorable.

In the master batch of the invention containing the (A) component and the (G) component, as for the compounding ratio of the (A) and (G) compounds described above, the (A) component/the (G) component is 2 to 95/98 to 5% by weight, preferably 10 to 90/90 to 10% by weight, and more preferably 10 to 60/90 to 40% by weight [with the proviso that (A)+(G) = 100% by weight].

When the (A) component is less than 2% by weight [the (G) component exceeds 98% by weight], the composition is poor in fluidity in preparing the master batch, resulting in poor dispersibility of the functional compound, further, a technique is required for kneading processing, and a long period of time is required as the processing time. On the other hand, when it exceeds 95% by weight [the (G) component is less than 5% by weight], the concentration of the functional compound is dilute. It is therefore necessary to add the master batch in large amounts for manifesting the performances. Accordingly, a problem arises with regard to economical efficiency. Further, when the master batch is added in large amounts, an influence on the base material is not negligible, which causes a problem.

For the compounding ratio in the master batch of the invention containing the (A) component, the (B) component and the (G) component, compounding is performed adjusting the total amount as the (A) component and the (B) component in place of the above-mentioned (A) component. It is not necessary that the (B) component is used together with the (A) component. They may be added separately to prepare one master batch or separate master batches.

As a method for producing the master batch of the invention, the above-mentioned (A) and (G) components, and the (B) component and other additives as needed, are compounded, thereby being able to produce the master batch. As a compounding method, the above-mentioned components may be added all at once and mixed using a mixer, or added in parts and mixed. As the mixers, there can be used various rolls, kneaders, extruders, mixers and the like.

As the shape of the master batch, it can be formed to various shapes such as pellet, granule, particle, chip-like, rod-like, foil, sheet and band shapes. However, the pellet-like master batch is preferred from the point of automatic measurement, and in the case of a roll operation, the sheet-like master batch is preferred.

In this case, the blend temperature is usually from 40 to 110°C, and preferably from 50 to 100°C.

### Laminates

The invention relates to a laminate in which a resin layer containing the above-mentioned (A) component or the composition thereof is laminated on a base layer.

Materials of the base layers constituting the laminates of the invention include plastics, rubber, metals such as steel plates, wood, paper, cloth, concrete, stone and the like, and preferred are metals. Further, the shapes of the base layers include, for example, planar, three-dimensional, dot, lattice, linear, helicoidal, spherical, concave and convex forms, and a combined use or combination thereof. Specific examples of the base layers include steel plates for automobiles and the like. The thickness of the base layer is preferably from 0.2 to 2 mm, and more preferably from 0.3 to 1.8 mm.

The hardness measured according to JIS K 6301 (type C) of a crosslinked product of a resin layer used in the laminate of the invention is preferably from 50 to 98, and more preferably from 60 to 96. When it is less than 50, vibration-damping properties and steel plate-reinforcing properties do not satisfy the contents of the present patent. On the other hand, exceeding 98 results in brittleness, which unfavorably causes the problem of damages in actual use. The hardness of the crosslinkedproduct can be easily adjusted with (D) the crosslinking agent.

The resin layer used in the invention is excellent in attachability. This attachability are measured by a method shown in Examples, and the vertex angle of a specified jig to which the resin layer fits is preferably from 30 degrees to 120 degrees, and more preferably from less than 30 degrees to 120 degrees. Exceeding 120 degrees results in poor attachability. This attachability can be easily adjusted with the (A), (B), (D) and (E) components.

The laminate of the invention is obtained by attaching a non-crosslinked sheet obtained from the above-mentioned (A) composition or the composition thereof onto one or both sides of the base layer, and conducting crosslinking (and foaming) in a heating medium. As the heating medium, there can be used a hot gas such as hot air or hot nitrogen, a hot fluid such as hot liquid paraffin, hot fine grained particles such as fine grained glass beads or the like. A hot gas, particularly hot air, is preferred among others. Further, heating by microwaves may be used. The heating temperature is usually from 120 to 250°C, and preferably from 140 to 180°C, and the heating time is from 15 to 120 minutes, and preferably from 20 to 90 minutes.

The thickness of the resin layer (crosslinked foam) obtained by crosslinking (foaming) is usually from 0.1 to 20 mm, and preferably from about 0.2 to about 15 mm, by the dry film thickness. The (A) component of the invention or the composition thereof is excellent in fluidity and attachability, so that the effects are achieved that the resulting laminate is excellent in vibration-damping properties, sound absorbing properties, sound insulating properties, sealing properties and steel plate-reinforcing properties.

In the laminate of the invention, an asphalt layer may be allowed to intervene between the above-mentioned base layer and the resin layer containing the (A) component of the invention or the composition thereof. The asphalt includes straight asphalt, blown asphalt-applied asphalt for vibration-damping materials and the like. The intervention of the asphalt layer gives the effects of the assistance to the vibration-damping performance and cost down.

The thickness of the asphalt layer is usually from 0.1 to 20 mm, and preferably from 0.2 to 15 mm.

### Methods for Producing Laminate (Clearance-Filling Methods)

Methods for producing the laminate of the invention (clearance-filling methods) include, for example, a method comprising the steps of the following (1) to (3) . (1) The sheet obtained from the (A) component of the invention or the composition thereof is attached onto one or both of faces of the base layer such as a metal having one face or faces opposite to each other. (2) The base layers are laminated to each other with the attached sheets sandwiched therebetween. (3) Crosslinking and foaming are conducted under the same heating conditions as described above to fill a specified clearance.

In addition, the clearance-filling methods of the invention include a method of filling a clearance such as a concave portion constituted by the base layer with the resin layer by a means such as attaching or standing, and crosslinking and foaming the filled resin layer under the same heating conditions as described above, a method of compressing an already formed open cell sponge in the inside of the resin layer, thereby allowing it to perform the assistance to foaming, a method of applying the base layer to a lower portion of the resin layer so that the resin layer is efficiently foamed, in the case of vertical plane foaming, thereby preventing sagging, and the like.

According to the clearance-filling method of the invention, the resin layer of the invention can fill the clearance to manifest the sound insulating, sound absorbing, soundproofing and heat insulation effects. The expansion ratio of the crosslinked foam is from 1.5 to 30 times, and preferably from 2 to 25 times.

### Examples

Specific embodiments to which the present invention is applied will be illustrated below. The invention should not be construed as being limited to the following examples, and it should goes without saying that any changes are possible within the scope not departing from the gist of the invention. Various measurements in examples are based on the following methods, and "parts" means parts by weight, unless otherwise indicated.

Various measurements in examples are based on the following methods:

### (1) 1,2-Vinyl Bond Content

The content was determined by the infrared absorption spectrum method (Morero method).

### (2) Weight Average Molecular Weight (Mw)

The Mw was determined in terms of polystyrene by gel permeation chromatography (GPC) (Type 244, manufactured by Waters Co.).

### (3) Wear Resistance

For Examples 1 to 5 and Comparative Example 1, the DIN wear amount (mm³) was evaluated.

For Examples 21 to 27 and Comparative Examples 20 to 26, a composition was press molded at a mold temperature of 160°C at 100 kgf/cm², and measurement was made based on DIN 53516. As for measuring conditions, the granularity was 60, the drum rotation was 40 rpm, the load was 10 N, and the moving distance was 40 m. Evaluation criteria are as follows: ⓞ: Less than 200. ○: 200 to less than 300. Δ: 300 to less than 400. ×: 400 or more.

For examples 28 to 30 and Comparative Examples 27 to 29, measurement was made by the Akron abrasion method using an Akron abrasion rotating tester under the following conditions:
Evaluation of solid: 6 Lbs, angle; 15 degrees, 1,000 cycles
Evaluation of sponge: 2 Lbs, angle; 15 degrees, 2,000 cycles
Wear resistance evaluation criteria of the Akron abrasion method are as follows:
Solid evaluation (cc/1,000 cycles); ⓞ: Less than 0.3. ○: 0.3 to 0.49. Δ: 0.5 to 0.69. ×: 0.7 or more.
Sponge evaluation (cc/2,000 cycles); ⓞ: Less than 0.4. ○: 0.4 to 0.49. Δ: 0.5 to 0.69. ×: 0.7 or more.

### (4) Melt Flow Rate (MFR) (Processability)

According to ASTM D1238, measurement was made at a measuring temperature of 150°C. The unit is g/10 min. The load is 2.16 kg for Examples 1 to 5 and Comparative Example 1, 5 kg for Examples 12 and 13 and Comparative Examples 5 and 6, and 21.2 N for Examples 16 to 18 and 21 to 42 and Comparative Examples 9 to 13 and 20 to 43. Evaluation criteria are as follows: ⓞ: 4 or more. ○: 3 to less than 4. Δ: 2 to less than 3. ×: Less than 2.

### (5) Forming Appearance

For Examples 6 to 10, Examples 21 to 27 and Comparative Examples 2, 3 and 20 to 26, a flowmark, surface roughness, brushing, a silver steak, bluing and the like on a surface of a formed article obtained by injection molding under the following molding conditions were visually observed. The molding conditions are as follows: molding machine: an in-line screw type injection molding machine, mold: a flat plate of a direct gate of 2X70X150 mm (thickness X width X length), molding temperature: 150°C, injectionpressure: 660 kg/cm², flowcontrol: medium, injection: 10 seconds, cooling: 50 seconds, and mold temperature: 30°C.

Evaluation criteria are as follows: ⓞ: A beautiful forming appearance is shown. ○ : Usable but inferior in the above-mentioned characteristics. Δ: Slightly poor. ×: Unfit for use, improper.

For Example 11 and Comparative Example 4, a kneaded granulated product was molded under the following conditions, and the thin wall molding appearance was evaluated.

The molding conditions are as follows: injection molding machine: IS170FA3 (manufactured by Toshiba Machine Co., Ltd.), mold: a mold of a cavity of 1.5X80X150 mm (thickness X width X length) (one point gate), molding temperature: 140°C, mold temperature: 20°C. primary injection pressure: 140 kgf/cm² (gauge pressure), injection speed: medium speed, and cooling: 20 seconds.

Evaluation criteria are as follows: ⓞ: Both a weld and a flow mark were not observed at all, and an excellent forming appearance was observed. ○: A weld was unremarkable, but some flow marks were observed. Δ: Some welds and flow marks were observed. ×: Remarkable welds and flow marks were observed.

For Examples 19 and 20 and Comparative Example 14 to 19, the processability was evaluated by the appearance of a formed article.

The molding conditions are as follows: molding machine: an injection molding machine, cylinder temperature: 230°C, mold temperature: 30°C, and mold: a 2-mm thick sheet-like cavity.

The appearance of the formed article was visually evaluated. Evaluation criteria are as follows: ⓞ: No flow mark is observed at all, good. ×: A flow mark is observed, poor.

For Examples 31 to 36 and Comparative Example 30 to 35, the surface (foamed) appearance of a sample for evaluating the expansion ratio described below was evaluated according to the following criteria: ⓞ: Traces of foaming outgassing are rarely found, and a round conical shape is taken. ○: Foaming outgassing is conspicuous, but a round conical shape is taken. Δ: Foaming outgassing is conspicuous, and the foaming shape is bad. ×: outgassing is much, and foaming is scarcely performed.

### (6) Impact Embrittlement Temperature

Using the above-mentioned injection-molded formed article as a test piece, measurement was made according to the method of JIS K 6261. The unit is °C.

### (7) Mold Releasability

① A kneaded composition sheet adjusted to 2.3-2.4X19X99 mm (thickness X width X length) was placed on a hard chrome plated lower mold of 2X20X100 mm wherein a part of lower face of the sheet was covered with a 0.1X21X20-mm fluorine release film placed along a short 20mm edge of cavity, and another fluorine release film was placed on the whole surface on the upper side of the sheet. After an upper plate of the mold was placed thereon, the mold was introduced into a heat board stabilized at 160°C of an upper stair of a compression molding machine (50 tons), and heated in a non-pressure state for 10 minutes (compression molding).
② The mold was introduced into a cooling board stabilized at 20°C of a lower stair of the compression molding machine, and cooled for solidification at 150 kgf/cm² (gauge pressure) for 10 minutes.
③ After the lower mold was fixed, the mold was opened, and the upper release film was removed.
④ A sheet end in a portion where the lower face is covered with the release film was taken up, and a opening having diameter of 2 mm was formed.
⑤ A hook of a spring balance having a maximum load of 1 kg was hooked in the opening portion, and straightly pulled upward (90-degree separation direction) to measure the initial separation load.
⑥ The resulting separation load value was used.
Evaluation criteria are as follows: ○: Less than 50 g/20 mm. Δ: 50 to 199 g/20 mm. ×: 200 g/20 mm or more.

### (8) Hardness

A kneaded composition sheet was placed on a mold having a cavity size of 2X130X140 mm (thickness X width X length), and an upper mold was closed. Then, compression molding was conducted in the same manner as with (7) mold releasability evaluation described above to obtain a formed article. After standing at 23±2°C for 16 hours, four formed sheets were laid one over another, and the hardness of a surface thereof was measured with a Shore D hardness tester or a JIS A hardness tester.

For Examples 21 to 27 and Comparative Examples 20 to 26, the softness was judged based on JIS K 6301 (type A), using the sample used for evaluation of the forming appearance. Evaluation criteria are as follows: ⓞ: Less than 80. ○: 80 to less than 90. Δ: 90 to less than 95. ×: 95 or more.

### (9) Tensile Strength

Using a formed article obtained by compression molding in the same manner as with (7) mold releasability evaluation described above, the tensile strength was measured based on JIS K 6251.

### (10) Breaking Elongation

Using a formed article obtained by compression molding in the same manner as with (7) mold releasability evaluation described above, the breaking elongation was measured based on JIS K 6251.

### (11) Bleeding Properties

A formed article obtained by compression molding in the same manner as with (7) mold releasability evaluation described above was allowed to stand in a thermostat at 50°C for 10 hours, and the surface appearance of the formed article was judged. Evaluation criteria are as follows: ○: No bleed is observed on a sheet surface with the naked eye, and there is no slimy feeling even when touched. Δ: No bleed is observed on a sheet surface with the naked eye, but there is a slimy feeling when touched. ×: A bleed is observed on a sheet surface with the naked eye, and a slimy feeling is significant.

### (12) Coloring Properties

For Examples 12 and 13 and Comparative Examples 5 and 6, taking as a standard color a mixture of 100 parts of polyethylene (YF-30, manufactured by Nippon Polyolefin Co., Ltd.) and 0.5 part of red iron oxide, the color difference was measured using a formed article obtained by compression molding in the same manner as with the above (7).

For Examples 16 to 18 and 21 to 30 and Comparative Examples 9 to 13 and 20 to 29, taking as a standard color a 2-mm thick sheet that sheeted by open two roll mills obtained by mixing 1% of cobalt blue (manufactured by Kyoritsu Kagaku K.K.) with polystyrene excellent in transparency (G120K, manufactured by Nippon Polystyrene Co., Ltd.), the color difference was measured. Evaluation criteria are as follows: ○: The color difference from the standard color is less than 1.5. Δ: The color difference from the standard color is from 1.5 to 3.0. ×: The color difference from the standard color exceeds 3.0.

### (13) Pattern Transferability

Respective components were mixed at a rate shown the table with a pressure kneader to obtain a composition. Using a roll machine having a roll surface having "textured patterns" (three kinds of rough, medium and fine) of specified roughness for evaluating pattern transferability, a sheet (thickness: 2.5 mm) to which the patterns were transferred was prepared from the resulting composition, and a surface of the sheet was visually judged. Evaluation criteria are as follows: ○: The three kinds of pattern are all transferred. Δ : Of the three kinds of patterns, the fine pattern is insufficiently transferred. x: Of the three kinds of patterns, the fine and medium patterns are insufficiently transferred.

### (14) Dimensional Stability

The sheet obtained in (13) pattern transferability described above was cut to a square form 40 cm on a side, and heated at 60°C for 2 hours. After immersion in water at ordinary temperature for 2 hours, it was heated gain at 60°C for 2 hours. After cooling to ordinary temperature, the dimension was measured. The rate (%) of change in dimension before and after the treatment described above was determined and indicated. The lower value shows the better dimensional stability.

### (15) Bending Properties

The sheet obtained in (13) pattern transferability described above was cut to a square form 40 cm on a side, and allowed to stand at an atmosphere temperature of 5°C for 2 hours. The sheet was bent through 180 degrees, and after 3 minutes, the presence or absence of a crack at a bent portion was evaluated. Evaluation criteria are as follows: ○: No crack was observed. ×: A crack was observed.

### (16) Roll Wrapping Properties

Roll used: a labo 10-inch test roll machine, surface temperature: 90±5°C, roll distance: 2.0 mm, guide width: 250 mm, number of revolutions: front roll/back roll = 24 rpm/20 rpm.

It was evaluated by the time taken until 1 kg of a compound cooled to room temperature wrapped around a roll tightly. Evaluation criteria are as follows: ⓞ: The compound wraps around within 5 minutes. ○: The compound wraps around within 7 minutes exceeding 5 minutes. Δ: The compound wraps around within 10 minutes exceeding 7 minutes. ×: The compound does not wrap around within 10 minutes.

### (17) Formability

It was evaluated by the thickness of a flash at the time when crosslinked using a mold of 2X150X150 mm (thickness X width X length). Evaluation criteria are as follows: ⓞ: 0.02 mm or less. ○: Exceeding 0.02 mm to 0.05 mm. Δ: Exceeding 0.05 mm to 0.08 mm. ×: Exceeding 0.08 mm.

### (18) (Linear) Expansion Ratio

The line (linear direction) ratio in a width direction of a sample crosslinked, foamed and allowed to stand a whole day and night was evaluated. The reference is the length (220 mm) in a width direction of the sample before crosslinking and foaming. Mold used: 8X120X220 mm (thickness X width X length).

### (19) (Clearance-Filling) Expansion Ratio

The ratio of the thickness of a product crosslinked, foamed and allowed to stand a whole day and night was evaluated. The reference is the thickness of the sample before crosslinking and foaming. Amain factor of the (clearance-filling) expansion ratio is the viscosity in foaming, so that the correlation with the fluidity (MFR) of the composition in foaming was strong. Accordingly, this also becomes an index of the fluidity of the composition. Evaluation criteria are as follows: ⓞ: 10 times or more. ○: 5 times to less than 10 times. Δ: 2 times to less than 5 times. ×: Less than 2 times.

### (20) Density

It was based on JIS K 7112. Evaluation criteria in Table 8 to 10 are as follows (the unit is g/cm³) : ○: 0.940 or less. Δ: 0.941 to 0.950. ×: 0.951 or more.

### (21) Heat Resistance

Based on ASTM D1525, the Vicat softening point was measured.

### (22) Compressive Permanent Set

It was based on JIS K 6262. Conditions are 70°C and 22 hours.

### (23) Flexibility

Based on JIS K 6253, one having a hardness exceeding 98 was taken as x (poor), and one having a hardness of 98 or less was taken as ○ (good).

### (24) Crosslinking Hardness

It was based on JIS K 6301, the spring hardness test (type C). Evaluation criteria are as follows: ⓞ: 70 or more. ○: 60 to 69. Δ: 50 to 59. ×: Less than 50.

### (25) Attachability (Index of Fluidity of Sample)

Steel plates having a length of 150 mm, a width of 100 mm and a thickness of 1 mm were processed to conical shapes having vertex angles of 30°, 45°, 60°, 90° and 120°, respectively. The sample was placed on each vertex angle, and a state in which the sample fitted to the vertex angle was judged. Evaluation criteria are as follows: ⓞ: The sample fits to an angle of 30° to less than 120°, and the visual shape of the sample is in good order. ○: The sample fits to an angle of 45° to less than 120°, and the visual shape of the sample is in good order. Δ: The sample fits to an angle of 90° to less than 120°, and the visual shape of the sample is in good order. ×: The sample does not fit to an angle of less than 120°.

### (26) Steel Plate Adhesion (Oil Face)

An antirust oil was applied onto a steel plate having a smooth surface (applied three times with a gauze impregnated with the oil to such a degree that the oil did not drip off), a sample of 2X40X40 mm (thickness X width X length) was placed thereon, and treatment (crosslinking and foaming) was conducted in an atmosphere of 150°C for 30 minutes. Then, the sample allowed to stand at room temperature for 2 hours was separated by a force of 3 kg/cm at a rate of 50 mm/min. Evaluation criteria are as follows: ⓞ : Cohesive failure occurs without occurrence of interfacial separation. ○: Cohesive failure almost occurs, although interfacial separation partly occurs. Δ: Half is interfacial failure. ×: All is interfacial failure.

### (27) Vibration-Damping Properties

Using a laminate of SPC steel plate/foamed asphalt/resin layer (0.8 mm in thickness/3mm in thickness/2 mm in thickness), the coefficient of loss was determined by the impedance method (JAS method). Evaluation criteria are as follows: ⓞ: 0.4 or more. ○: 0.3 to 0.39. Δ: 0.2 to 0.29. ×: Less than 0.2.

### (28) Fitting Ability Test (Evaluation of Crosslinking Fluidity)

A sample of 2X100X100 mm (thickness X width X length) was placed on a 1-mm steel plate (provided with support rods) cut out a circular opening of 60 mmφ, and crosslinking fluidity was evaluated under conditions of 150°C X 30 minutes. Judgment was made by the distance between a surface of the sample adhered to the steel plate and a vertex which fell in the opening. Evaluation criteria are as follows: ⓞ: Exceeding 15 mm. ○: 10 to 15 mm. Δ: 5 to 10 mm. ×: Less than 5 mm.

### (29) Blocking Properties of Master Batch

A granulated product was packed in a plastic bag, and allowed to stand in a thermostat at 40°C for 1 week, applying a constant load (25 g/cm²), to judge blocking properties. Evaluation criteria are as follows: ○: No blocking occurs. ×: Blocking occurs in storage.

### (30) Shape of Master Batch (Sheet and Pellets)

The shape of a master batch was evaluated according to the following judging criteria: ○: Good (a functional material is cohesive, a sheet is smooth, the shape and form of pellets are uniform) . Δ: Somewhat poor (Although a functional material is cohesive, the shape and form of pellets are non-uniform). ×: Poor (Fixation of a functional material is insufficient, and the shape and form of pellets are non-uniform).

### (31) Dispersibility of Master Batch to Rubber (in Roll Operation)

The following SBR compound was wrapped around a 10-inch roll (roll temperature: 50°C), and a crosslinking (curing), vulcanization accelerator master batch was added to judge the dispersibility. A compound of 100 parts of a SBR compound (SBR 1500 manufactured by JSR Corporation), 50 parts of HAF black, 9 parts of an aromatic process oil (Diana Process Oil AH-58 manufactured by Idemitsu Kosan Co., Ltd.), 3 parts of stearic acid and 4 parts of Zinc Oxide No. 1.

Evaluation criteria are as follows. Uniform dispersion means a state in which no fish eye remains, when a milling sheet obtained at a 0. 5-mm clearance sheeting is held up to a fluorescent lamp to visually observe the state of dispersion. ○: Good (the sheet or pellet form disappears immediately after the addition of the master batch, which is uniformly dispersed in a roll operation within 1 minute). Δ : Somewhat poor (in a roll operation for about 1 minute after the addition of the master batch, the sheet or pellet form partly remains, and the master batch is uniformly dispersed within 3 minutes exceeding 1 minute) . ×: Poor (the sheet or pellet form does not disappear even when a roll operation is conducted exceeding 3 minutes after the addition of the master batch).

Further, components used in Examples and Comparative Examples are as follows:
(a-1) : Polybutadiene prepared in the following Reference Example 1, 1,2-vinyl bond amount = 93%, Mw = about 400,000
(a-2) RB820: Manufactured by JSR Corporation, syndiotactic-1,2-polybutadiene, 1,2-vinyl bond amount = 92%, Mw = about 170,000, MFR = 3
(a-3) RB830: Manufactured by JSR Corporation, syndiotactic-1,2-polybutadiene (1,2-vinyl bond amount = 93%, Mw = about 170,000, MFR = 3)
(a-4) RB810: Manufactured by JSR Corporation, syndiotactic-1,2-polybutadiene (1,2-vinyl bond amount = 90%, Mw = about 170,000, MFR = 3)

### (e) Extender Oils

(e-1) Diana Process Oil PS-32 (manufactured by Idemitsu Kosan Co., Ltd.), a paraffinic process oil, V.G.C. = 0.8133
(e-2) Diana Process Oil PW-380 (manufactured by Idemitsu Kosan Co., Ltd.), a paraffinic process oil, V.G.C. = 0.7972
(e-3) Fukkol FLEX #2050N (manufactured by Fuji Kosan Co., Ltd.), a naphthenic process oil, V.G.C. = 0.8376
(e-4) Diana Process Oil AH-58 (manufactured by Idemitsu Kosan Co., Ltd.), an aromatic process oil, V.G.C. = 0.7972

### (B) Other Polymers

(B-1) TR1600: Manufactured by JSR Corporation, an oil-extended styrene-butadiene-styrene block copolymer, binding styrene (ST) amount = 32%, oil extension amount = 45 PHR, oil species = paraffinic series, MFR (based on ASTM D1238, 200°C, 5 kg) = 18.5 g/10 min.
(B-2) TR1086: Manufactured by JSR Corporation, an oil-extended styrene-butadiene-styrene block copolymer, binding ST amount = 45%, oil extension amount = 50 PHR, oil species = paraffinic series, MFR (based on ASTM D1238, 200°C, 5 kg) = 10.5 g/10 min
(B-3) TR1000: Manufactured by JSR Corporation, an oil-extended styrene-butadiene-styrene block copolymer
(B-4) HSR0061: Manufactured by JSR Corporation, high-styrene rubber
(B-5) IR2200: Manufactured by JSR Corporation, polyisoprene rubber, Mw =800,000
(B-6) SBR1502: Manufactured by JSR Corporation, polystyrene butadiene rubber, binding ST amount = 23.5%, Mw = 450,000
(B-7) LF25R: Manufactured by Nippon Polychem Corp., polypropylene, MFR = 23 g/10 min
(B-8) EP504EC: Manufactured by JSR Corporation, olefinic rubber
(B-9) 120K: Manufactured by Nihon Polystyrene Co., Ltd., polystyrene
(B-10) BR01: Manufactured by JSR Corporation, polybutadiene rubber, cis-1,4 bond content = 96%, Mw =580,000
(B-11) TR2000: Manufactured by JSR Corporation, a styrene-butadiene block polymer, binding ST amount = 40%, multiblock type
(B-12) R-45M: Manufactured by Idemitsu Petrochemical Co., Ltd., liquid polybutadiene, Mn = 3,000 to 4,000
(B-13) SBR1507: Manufactured by JSR Corporation, styrene-butadiene rubber, binding ST amount = 23.5%, Mooney viscosity = 35 (ML₁₊₄, 100°C)
(B-14) SBR1500: Manufactured by JSR Corporation, styrene-butadiene rubber, binding ST amount = 23.5%, Mooney viscosity = 52 (ML₁₊₄, 100°C)

### Filling Agents

Calcium carbonate heavy (CaCO₃): Manufactured by Nitto Funka Kogyo K.K., average particle size; 5 µm

Calciumcarbonate light (CaCO₃) : Manufactured by Shiraishi Kogyo Kaisha, Ltd., trade name "Silver W", average particle size; 1.4 µm

Calcium carbonate (CaCO₃) : Manufactured by Maruo Calcium Co., Ltd., "Super S", oil absorption; 23 cc/100 g, average particle size; 1.8 µm

Mica: Manufactured by Repco, Inc., a scale-like filling agent (average length; 150 µm, average thickness; 5 µm)

Silica: Manufactured by Nippon Silica Industrial Co., Ltd., Nipseal VN3

Hard clay: Manufactured by Vanderbilt (USA), Dixie Clay

Talc (hydrated magnesium silicate): Manufactured by Nippon Talc Co., Ltd., Talc SW

FEF carbon black: Manufactured by Asahi Carbon Co., Ltd., Asahi #60

HAF carbon black: Manufactured by Asahi Carbon Co., Ltd., Asahi #70

### Bitumen

Straight asphalt: Manufactured by Showa Shell Sekiyu K.K., penetration; 60 to 80

### Active Agents

Zinc oxide: Manufactured by Sakai Chemical Industry Co. Ltd., Zinc Oxide No. 1

Zinc oxide: Manufactured by Sakai Chemical Industry Co. Ltd., Zinc Oxide No. 2

Diethylene glycol: Manufactured by Nippon Shokubai Kagaku Kogyo Co., Ltd., SG 1.18

### Antioxidants

TNT (Trinonylated phenylphosphite): Manufactured by Ouchishinko Chemical Industrial Co., Ltd., NOCRAC TNP

BHT (2,6-di-t-butyl-4-methylphenol): Manufactured by Ouchishinko Chemical Industrial Co., Ltd., NOCRAC 200

### Organic Peroxides

Percumyl D (di-cumyl peroxide): Manufactured by Nippon Oil and Fats Co., Ltd., half time; 117°C

Perhexa 25B-40 (2,5-dimethyl-2,5-di(t-butylperoxy)-hexane): Manufactured by Nippon Oil and Fats Co., Ltd., half time; 118°C

Perhexa 3M (1,1-di-t-butylperoxy-3,3,5-trimethyl-cyclohexane): Manufactured by Nippon Oil and Fats Co., Ltd., half time; 90 to 95°C

### Multifunctional Monomer

Hicross M (trimethylolpropane trimethacrylate) Manufactured by Seiko Chemical Co., Ltd.

### Foaming Aid

Cellpaste K5: Manufactured by Eiwa Chemical Ind. Co., Ltd.

### Foaming Agents

ADCA: Manufactured by Eiwa Chemical md. Co., Ltd., Vinyfor AC #3

DNPT: Manufactured by Eiwa Chemical Ind. Co., Ltd., Cellular D

### Curing (Crosslinking) Agent

Sulfur powder (insoluble): Manufactured by Tsurumi Chemical Ind. Co., Ltd., "Golden Flower" sulfur powder

### Vulcanization Accelerators (Crosslinking Aids)

MBTS (dibenzothiazyldisulfide) : Manufactured by Ouchishinko Chemical Industrial Co., Ltd., Nocceler DM

TMTD (tetramethylthiuramdisulfide): Manufactured by Ouchishinko Chemical Industrial Co., Ltd., Nocceler TT

MBT (2-mercaptobenzothiazole): Manufactured by Ouchishinko Chemical Industrial Co., Ltd., Nocceler M

CBS (N-cyclohexyl-2-benzothiazylsulfeneamide): Manufactured by Ouchishinko Chemical Industrial Co., Ltd., Nocceler CZ

### Lubricant

### Stearic Acid: Manufactured by Asahi Denka Kogyo K.K., melting point; 71 to 72°C, white powder

### Reference Examples 1 (Preparation of (a-1))

To a vertical reactor vessel having an internal volume of 20 liters and equipped with a stirrer, 8,000 g of a cyclohexane/n-heptane (weight ratio: 80:20) mixed solvent and 1, 600 g of 1,3-butadiene were added, and 6.58 g (1, 3-butadiene/Al molar ratio: 1, 350) of a toluene solution of methylaluminoxane and 1.50 g (1,3-butadiene/Comolar ratio: 180,000) of a methylene chloride solution of cobalt bis[tris(4-methylphenyl)-phosphine]dichloride were added with a syringe. Then, polymerization was started at a polymerization temperature of 45°C. After the reaction for 120 minutes, a small amount of ethanol containing 2,6-di-t-butyl-p-cresol as a reaction terminator was injected , thereby terminating the polymerization reaction. The yield of the resulting polymer (a-1) was 90% (1.44 kg as the polymer weight). The molecular weight of polymer (a-1) was about 400,000, and the 1,2-vinyl bond content was 93%.

### Example 1

In a 5-liter SUS-made vessel equipped with a stirrer, 2, 000 g (300 g as polymer (a-1)) of the polymer solution obtained in Reference Example 1 was placed, and 52.9 g of (e-1) was further addedas (e) the extender oil. The mixture was uniformly stirred. Then, using a solvent recovery apparatus, steam stripping was carried out for about one hour. After a polymer mass was cooled, it was dried to obtain (A-1) oil-extended 1,2-polybutadiene having the specified oil extension amount shown in Table 1. Results are shown in the following table.

### Examples 2 to 5 and Comparative Example 1

Using the polymer solution of polymer (a-1) obtained in Reference Example 1, (e) extender oils were added according to compounding formulations shown in the table to obtain (A-2) to (A-5) oil-extended 1,2-polybutadienes in the same manner as with Example 1. In Comparative Example 1, no extender oil was added to polymer (a-1). Results are shown in the table. (A) oil-extended 1,2-polybutadienes obtained (Examples 1 to 5) had excellent wear resistance and processability. In contrast, wear resistance and processability were lowered in Comparative Example 1.

### Examples 6 to 10 and Comparative Examples 2 and 3

Further, (B-1) TR1600 was blended as (B) another polymer with these (A) oil-extended 1,2-polybutadienes, respectively, of which content is 20%, as shown in Table 2, and the forming appearance by injection molding was evaluated. Comparative Example 2 shows the forming appearance of (B-1) TR1600 alone, which is extremely poor. Further, Comparative Example 3 shows a system in which 1,2-polybutadiene not oil-extended (polymer (a-1) alone) was blended in the same manner as with Examples, and the forming appearance thereof was inferior to that of Examples 6 to 10 in which the (A) component was used.

**Table 1**

| | Example | | | | | Comparative Example |
|---|---|---|---|---|---|---|
| | 1 | 2 | 3 | 4 | 5 | 1 |
| Composition | A-1 | A-2 | A-3 | A-4 | A-5 | a-1 |
| Compounding Ratio (parts) | | | | | | |
| (a-1) | 85 | 70 | 50 | 70 | 70 | 100 |
| (e-1) | 15 | 30 | 50 | 0 | 0 | 0 |
| (e-2) | 0 | 0 | 0 | 30 | 0 | 0 |
| (e-3) | 0 | 0 | 0 | 0 | 30 | 0 |

| Results of Evaluation | | | | | | |
|---|---|---|---|---|---|---|
| Wear Resistance (DIN wear amount) mm³ | 167 | 159 | 152 | 157 | 153 | 221 |
| Processability (MFR) g/10 min | 0.4 | 1.6 | 14.0 | 1.0 | 0.8 | <0.1 |

**Table 2**

| | Example | | | | | Comparative Example | |
|---|---|---|---|---|---|---|---|
| | 6 | 7 | 8 | 9 | 10 | 2 | 3 |
| Compounding Ratio (parts) | | | | | | | |
| (A-1) | 20 | 0 | 0 | 0 | 0 | 0 | 0 |
| (A-2) | 0 | 20 | 0 | 0 | 0 | 0 | 0 |
| (A-3) | 0 | 0 | 20 | 0 | 0 | 0 | 0 |
| (A-4) | 0 | 0 | 0 | 20 | 0 | 0 | 0 |
| (A-5) | 0 | 0 | 0 | 0 | 20 | 0 | 0 |
| (a-1) | 0 | 0 | 0 | 0 | 0 | 0 | 20 |
| (B-1) TR1600 | 80 | 80 | 80 | 80 | 80 | 100 | 100 |
| Appearance of Formed | ⓞ | ⓞ | ⓞ | ⓞ | ⓞ | × | ○ |
| Article | | | | | | | |

### Examples 11 to 15 and Comparative Examples 4 to 8

As shown in the following Table 3, (B-1) TR1600 was mixed as another thermoplastic resin with (A-2) oil-extended 1,2-polybutadiene at a rate shown in the table (Example 11) to obtain a composition most suitable for the mudguard application. Comparative Example 4 shows a system in which (a-3) RB830 was used as 1,2-polybutadiene not oil-extended. This maintains an impact embrittlement temperature of -50°C suitable for the mudguard application, but is poor in thin wall molding appearance.

Further, as shown in Table 4, (B-2) TR1086 was mixed as another thermoplastic resin with (A-2) oil-extended 1,2-polybutadiene at a rate shown in Table 4 (Examples 12 and 13) to obtain a composition most suitable for the toy application. Comparative Examples 5 and 6 show a system in which (a-3) RB830 was used as 1,2-polybutadiene not oil-extended. This has mold releasability, fluidity, mechanical characteristics and bleeding properties, but is poor in coloring properties.

Furthermore, as shown in Table 4, (B-3) TR1000 was mixed as another thermoplastic resin, calcium carbonate and mica as filling agents, a process oil as a plasticizer with (A-2) oil-extended 1,2-polybutadiene at a rate shown in the table (Examples 14 and 15) to obtain a composition most suitable for the backing material application. Comparative Examples 7 and 8 show a system in which (a-2) RB820 was used as 1, 2-polybutadiene not oil-extended. This has hardness, dimensional stability and bending properties suitable for the backing material application, but is poor in pattern transferability.

**Table 3**

| | Example 11 | Comparative Example 3 |
|---|---|---|
| Compounding Ratio (parts) | | |
| (A-2) | 20 | 0 |
| (B-1) TR1600 | 80 | 80 |
| (a-3) RB830 | 0 | 20 |

| Results of Evaluation | | |
|---|---|---|
| Thin Wall Molding Appearance | ⓞ | ○ |
| Impact embrittlement temperature (°C) | <-50 | <-50 |

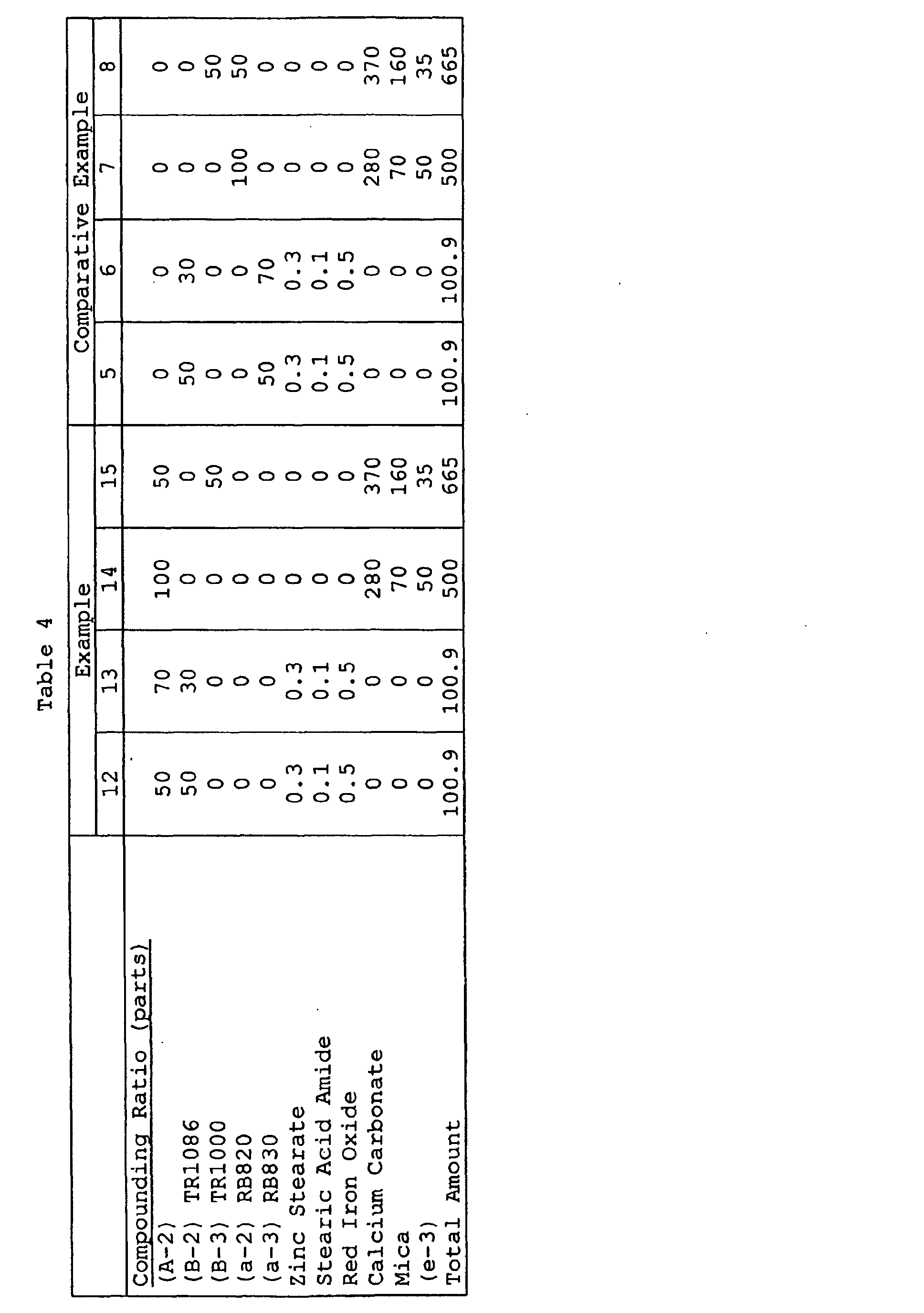

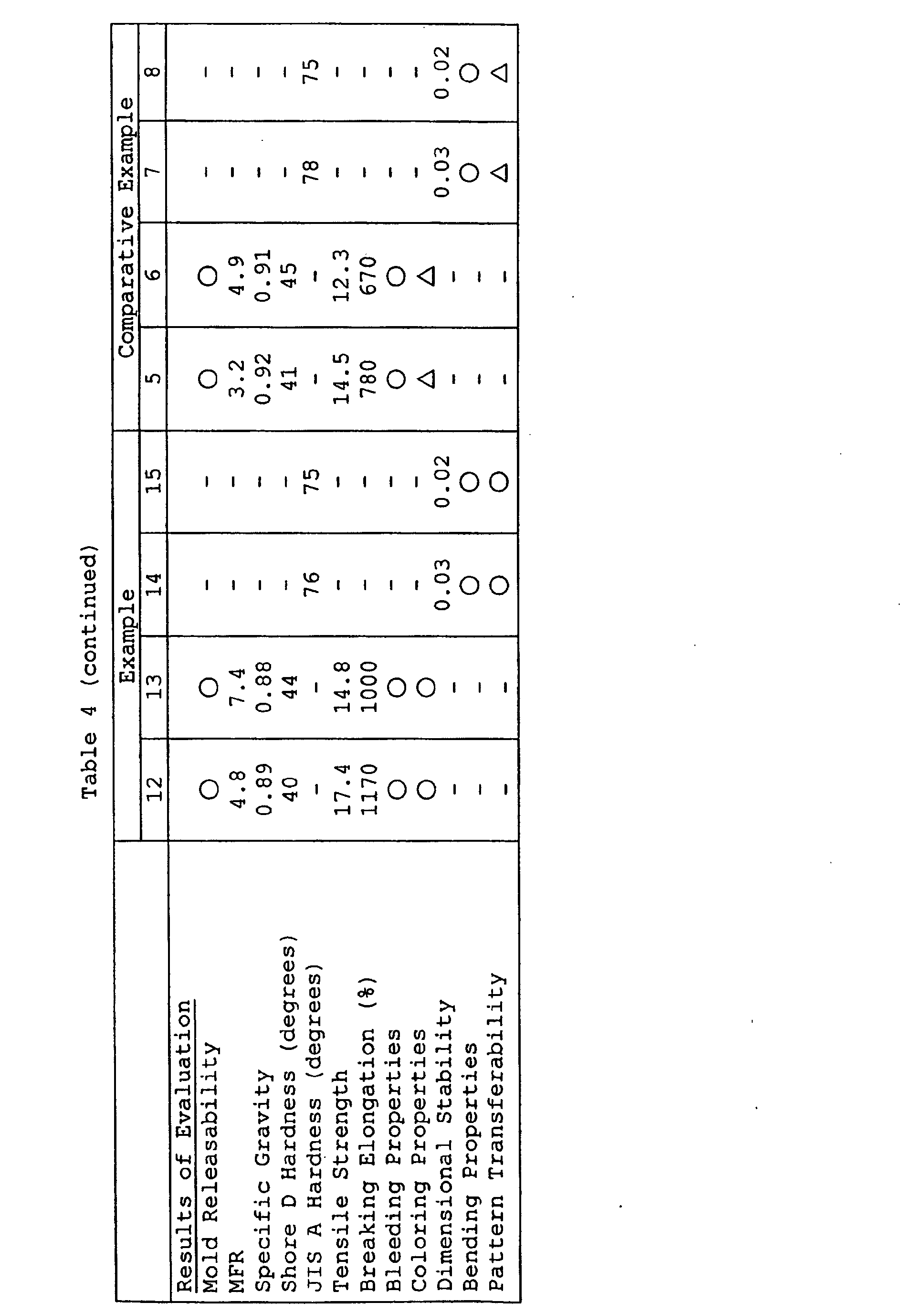

The following were prepared as the (A) component.

(A-6) oil-extended 1,2-polybutadiene: 1,2-vinyl bond content = 90%, Mw = 400,000, extender oil (e-1) amount = 30%, (1,2-polybutadiene amount = 70%, since the total amount of 1,2-polybutadiene and extender oil is 100%, the 1,2-polybutadiene amount is hereinafter omitted.), MFR = 1.6

(A-7) 1, 2-vinyl bond content = 90%, Mw = 300, 000, extender oil (e-1) amount = 20%, MFR = 4.5

Examples 16 and 17, Comparative Examples 9 to 11 (the above, solid compounding), Example 18 and Comparative Examples 12 and 13 (the above, sponge compounding)

According to compounding formulations shown in Tables 5 and 6, compounding agents excluding a crosslinking agent, a vulcanization accelerator and (a foaming agent) were kneaded by the use of a Banbury mixer at a temperature of 90 to 120°C for 5 minutes, and then, a specified amount of agents was added with a 10-inch test roll machine to prepare a non-crosslinked compound.

The non-crosslinked compound prepared was formed to a specified shape, and crosslinked with a 150T steam-curing (crosslinking) press machine according to conditions shown in the tables to obtain a crosslinked formed article. Results are shown in Tables 5 and 6.

Table 5 shows examples of solid compounding. Examples 16 and 17 are examples using (A-6) oil-extended RB of the invention, and in processability, the decrease of the time necessary for room temperature cooled compound to tightly wrap around a roll machine results in dissolving the conventional disadvantage that the processing time is long, compared to Comparative Examples 9 and 10 using conventional (a-3) RB830. Further, also for crosslinking formability, a flash of the formed article becomes substantially thin, so that the dimensional accuracy of the formed article is improved. Furthermore, the formed article is excellent in coloring properties, and can be applied to a product requiring brilliant colors. As for tensile strength, heat resistance and compressive permanent set improved by crosslinking, Examples 16 and 17 and Comparative Examples 9 and 10 are both good, and there is no difference therebetween.

Comparative Example 11 shows a non-crosslinked composition using (A-6) oil-extended RB of the invention, which was good in processability similarly to Examples. However, crosslinking forming under conditions of 160°C and 10 minutes was impossible because no crosslinking agent was contained. It was therefore impossible to form the composition, resulting in failure to obtain a formed article. It was therefore impossible to evaluate coloring properties. Tensile strength, heat resistance and compressive permanent set evaluated according to non-crosslinking forming were all inferior to those of Examples, for example, low in strength.

On the other hand, Table 6 shows examples of sponge compounding. Example 18 is an example using (A-7) oil-extended RB of the invention, and similarly to the case of solid compounding, processability was good also in sponge compounding, compared to Comparative Example 12 using conventional (a-3) RB830. That is to say, the the decrease of the time necessary for room temperature cooled compound to tightly wrap around a roll machine resulted in dissolving the conventional disadvantage that the processing time was long. Further, also for crosslinking formability, a flash of the formed article became substantially thin, so that the dimensional accuracy of the formed article was improved. Furthermore, the foaming ratio was increased when the same amount of foaming agent was added, because of the excellent foaming properties of (A-7) oil-extended RB of the invention. This indicates that it becomes possible to decrease the amount of the expensive foaming agent, which makes it possible to reduce compounding unit cost. As for tensile strength of crosslinked composition, Example 18 and Comparative Example 12 were both good, and there was no difference therebetween. In Comparative Example 13, a non-crosslinked composition using (A-7) oil-extended RB of the invention was used, so that the processability was good similarly to Examples. However, the force for maintaining foaming gas generated by decomposition of the foaming agent (viscosity for maintaining gas due to crosslinking) was weak, because sulfur and a vulcanization accelerator were not contained. Accordingly, forming was impossible under conditions of 165°C and 10 minutes, resulting in failure to obtain a foamed formed article, so that all evaluations were impossible.

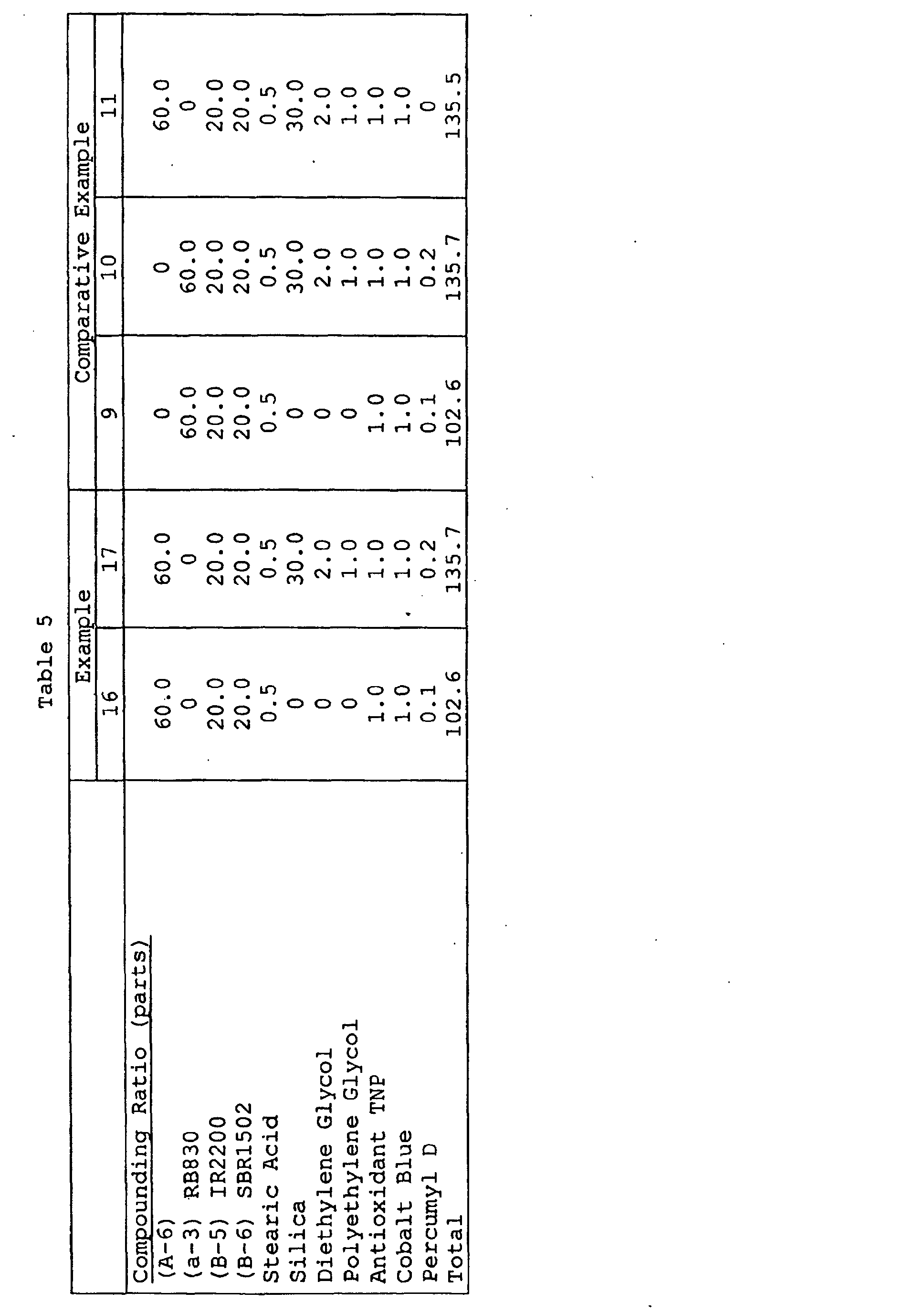

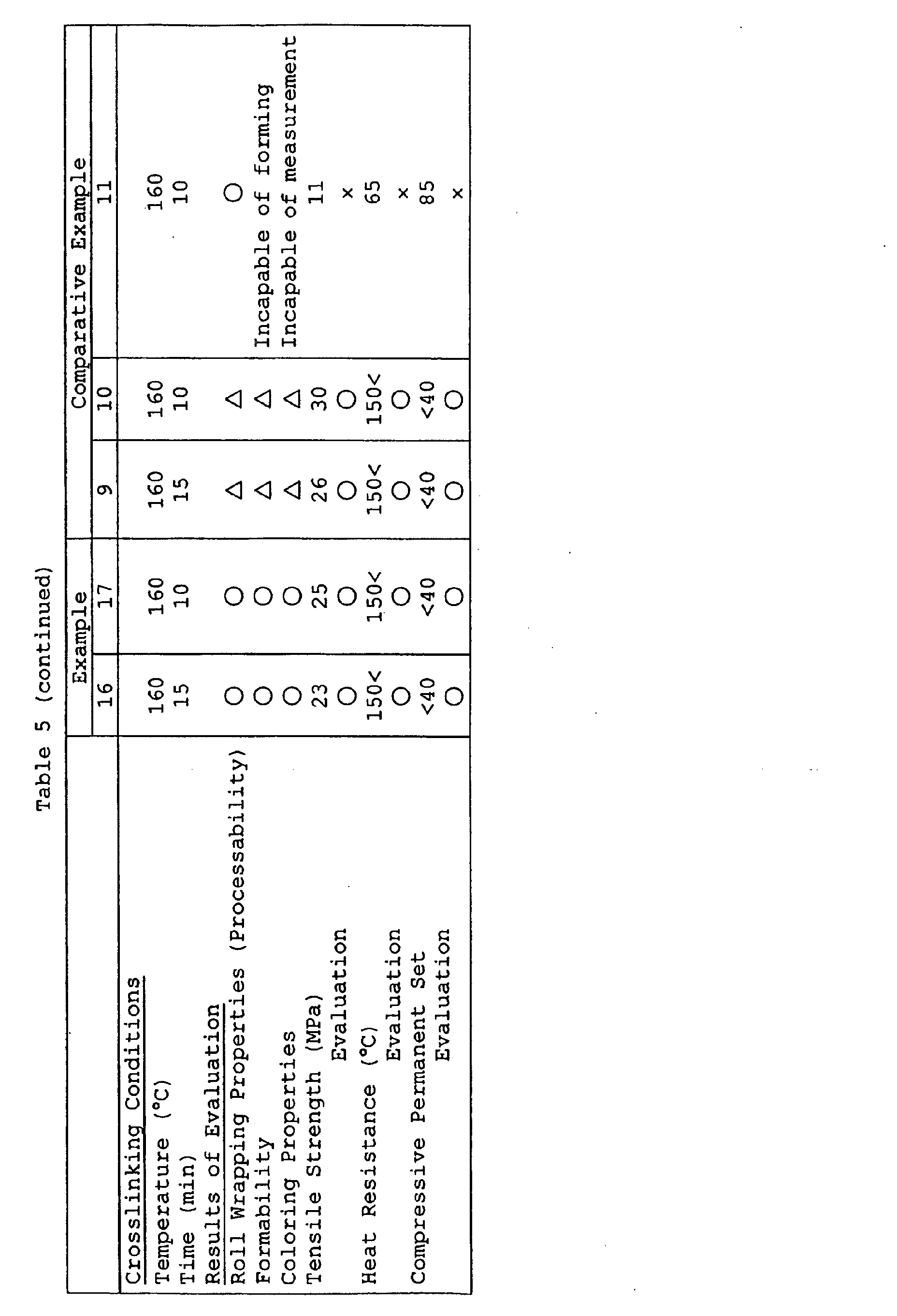

**Table 6**

| | Example | Comparative Example | |
|---|---|---|---|
| | 18 | 12 | 13 |
| Compounding Ratio (parts) | | | |
| (A-7) | 60.0 | 0 | 60.0 |
| (a-3) RB830 | 0 | 60.0 | 0 |
| (B-4) HSR0061 | 10.0 | 10.0 | 10.0 |
| (B-5) IR2200 | 30.0 | 30.0 | 30.0 |
| Stearic Acid | 2.0 | 2.0 | 2.0 |
| Zinc Oxide No. 2 | 3.0 | 3.0 | 3.0 |
| Silica | 30.0 | 30.0 | 30.0 |
| Hard Clay | 20.0 | 20.0 | 20.0 |
| Diethylene Glycol | 3.0 | 3.0 | 3.0 |
| Antioxidant BHT | 1.0 | 1.0 | 1.0 |
| Titanium Oxide | 5.0 | 5.0 | 5.0 |
| Cobalt Blue | 1.0 | 1.0 | 1.0 |
| Sulfur Powder | 1.3 | 1.3 | 0 |
| Vulcanization Accelerator MBTS | 1.4 | 1.4 | 0 |
| Vulcanization Accelerator MBT | 0.3 | 0.3 | 0 |
| Foaming Aid Cellpaste K5 | 2.0 | 2.0 | 2.0 |
| Foaming Agent ADCA | 2.0 | 2.0 | 2.0 |
| Foaming Agent DNPT | 2.0 | 2.0 | 2.0 |
| Total | 174.0 | 174.0 | 171.0 |

| Crosslinking Conditions | | | |
|---|---|---|---|
| Temperature (°C) | 165 | 165 | 165 |
| Time (min) | 10 | 10 | 10 |
| Results of Evaluation | | | |
| Roll Wrapping Properties | ○ | Δ | ○ |
| (Processability) | ○ | Δ | 1) |
| Formability | ○ | Δ | 1) |
| Coloring Properties | 1.53 | 1.47 | 2) |
| Foaming Ratio (Line) (times) | 0.30 | 0.37 | 3) |
| Density (Mg/m³) | 4.5 | 5.5 | 3) |
| *(Mpa) Tensile Strength* (MPa) Evaluation | ○ | ○ | × |

| | | | |
|---|---|---|---|
| *: Measured using a sample provided with a skin on one side. 1) Incapable of forming 2) Incapable of evaluation 3) Incapable of measurement | | | |

The following was prepared as the (A) component.

(A-8) oil-extended 1,2-polybutadiene: 1,2-vinyl bond content = 93%, Mw = 400,000, extender oil (e-3) amount = 20%, manufactured by JSR Corporation, a trial product

Examples 19 and 20 and Comparative Examples 14 to 19

According to compounding formulations shown in the following table, respective components were compounded using a 40-mmφ twin-screw extruder to obtain pellets. Using these pellets, each sample piece was prepared and evaluated. Results are shown in the following table.

The thermoplastic polymer compositions containing oil-extended (A-8) RB, together with the olefinic resin (B-7) and the olefinic rubber (B-8), at a specific rate were excellent in tensile strength, forming appearance (processability) and flexibility.

**Table 7**

| | Example | | Comparative Example | | | | | |
|---|---|---|---|---|---|---|---|---|
| | 19 | 20 | 14 | 15 | 16 | 17 | 18 | 19 |
| Compounding Ratio (parts) | 10 | 6 | 10 | 10 | 2 | 95 | 43 | 1 |
| (A-8) | 20 | 35 | 70 | 2 | 28 | 4 | 55 | 4 |
| (B-7) | 70 | 59 | 20 | 88 | 70 | 1 | 2 | 95 |
| (B-8) | 0.5 | 1.5 | 0.5 | 0.5 | 0.2 | 0.5 | 0.5 | 0.5 |
| Perhexa 25B-40 | | | | | | | | |
| Results of Evaluation | 9 | 8 | 10 | 8 | 2 | 5 | 3 | 2 |
| Tensile Strength | ○ | ○ | ○ | × | ○ | ○ | ○ | × |
| Forming Appearance (Processability) Flexibility | ○ | ○ | × | ○ | ○ | ○ | × | ○ |

The following were prepared as the (A) component.

(A-9) oil-extended 1,2-polybutadiene: 1,2-vinyl bond content = 90%, Mw = 200,000, extender oil (e-1) amount = 15%, MFR = 9

(A-10) oil-extended 1,2-polybutadiene: 1,2-vinyl bond content = 90%, Mw = 400,000, extender oil (e-3) amount = 50%, MFR = 4

(A-11) oil-extended 1,2-polybutadiene: 1,2-vinyl bond content = 90%, Mw = 170,000, extender oil (e-3) amount = 50%, MFR = 110

### Examples 21 to 27 and Comparative Examples 20 to 26

Examples 21 and 22 and Comparative Examples 20 and 21 are shown as shoe sole characteristics of oil-extended RB and non-oil-extended RB alone in Table 8. Each RB was directlymolded with an injection molding machine under specific conditions, and subjected to the evaluations.

Examples 21 and 22 are examples using oil-extended RB of the invention, and excellent in all of formability, coloring properties, injection molding appearance, flexibility, wear resistance and lightness in weight important for the shoe sole application, which reveals that the compositions are significantly excellent for the shoe sole application. The compositions are excellent in formability, coloring properties, flexibility and wear resistance, compared to (a-2) RB820 and (a-3) RB 830, Comparative Examples 20 and 21, so that Examples 21 and 22 are preferred. As for forming appearance and lightness in weight which are excellent characteristics of RB, Examples 21 and 22 and Comparative Examples 20 and 21 are both good, and there is no difference therebetween.

Examples 23 to 27 and Comparative Examples 22 to 26 are shown in Tables 9 and 10.

In Table 9, after respective components were kneaded by the use of a 40-mmφ open vent type single-screw extruder (screw: front dulmage) at a temperature of 120 to 140°C, and pelletized, the pellets were molded with an injection molding machine and the molded article was evaluated.

Examples 23 and 24 are examples using oil-extended RB of the invention and Comparative Examples 22 and 23 show examples using existing (a-2) RB820 and (a-3) RB830. Examples are preferred, because they are excellent in formability, coloring properties and wear resistance, compared to Comparative Examples. As for injection molding appearance and lightness in weight which are advantages of RB, Examples 23 and 24 and Comparative Examples 22 and 23 are both good, and there is no difference therebetween.

In Table 10, after respective components were kneaded by the use of a pressure kneader at a temperature of 120 to 150°C for 15 minutes, the resulting mixture was pelletized through a feeder ruder set to 160°C. Using the pellets, each sample for evaluation was prepared by molding with an injection molding machine under specific conditions and evaluated.

Examples 25 to 27 are examples using oil-extended RB of the invention, Comparative Example 24 is an example using existing (a-3) RB830, Comparative Example 25 is an example in which the oil of Example 27 (solution blend in line after polymerization) is blended in compound processing, and Comparative Example 26 is an example using no RB.

Examples 25 to 27 are preferred, because they are excellent in formability, coloring properties, injection molding appearance and wear resistance important for the shoe sole application, compared to Comparative Examples 24 to 26. As for flexibility (hardness) and lightness in weight, Examples and Comparative Examples were both good, and there was no difference therebetween.

**Table 8**

| | Example | | Comparative Example | |
|---|---|---|---|---|
| | 21 | 22 | 20 | 21 |
| RB Species | A-9 | A-10 | (a-2) RB820 | (a-3) RB830 |
| Results of Evaluation | | | | |
| Formability (MFR) | ⓞ | ⓞ | ○ | ○ |
| Coloring Properties | ○ | ○ | Δ | Δ |
| Injection Molding Appearance | ⓞ | ⓞ | ⓞ | ⓞ |
| Hardness | ○ | ⓞ | Δ | Δ |
| Wear Resistance | ○ | ⓞ | × | Δ |
| Lightness in Weight (density) | ○ | ○ | ○ | ○ |

**Table 9**

| | Example | | Comparative Example | |
|---|---|---|---|---|
| | 23 | 24 | 22 | 23 |
| Compounding Ratio (parts) | | | | |
| (a-2) RB820 | 0 | 0 | 20 | 0 |
| (a-3) RB830 | 0 | 0 | 0 | 20 |
| (A-9) | 20 | 0 | 0 | 0 |
| (A-10) | 0 | 20 | 0 | 0 |
| (B-1) TR1600 | 80 | 80 | 80 | 80 |
| Total Amount | 100 | 100 | 100 | 100 |

| Results of Evaluation | | | | |
|---|---|---|---|---|
| Formability (MFR) | ⓞ | ⓞ | ○ | ○ |
| Coloring Properties | ○ | ○ | Δ | Δ |
| Injection Molding Appearance | ⓞ | ⓞ | ⓞ | ⓞ |
| Hardness | ⓞ | ⓞ | ⓞ | ⓞ |
| Wear Resistance | ⓞ | ⓞ | Δ | ○ |
| Lightness in Weight (density) | ○ | ○ | ○ | ○ |

**Table 10**

| | Example | | | Comparative Example | | |
|---|---|---|---|---|---|---|
| | 25 | 26 | 27 | 24 | 25 | 26 |
| Compounding Ratio (parts) | | | | | | |
| (a-3) RB830 | 0 | 0 | 0 | 20 | 10 | 0 |
| (A-10) | 20 | 10 | 0 | 0 | 0 | 0 |
| (A-11) | 0 | 0 | 20 | 0 | 0 | 0 |
| (B-1) TR1600 | 100 | 100 | 100 | 100 | 100 | 100 |
| (B-9) 120K | 10 | 10 | 10 | 10 | 10 | 10 |
| Silver W | 10 | 10 | 10 | 10 | 10 | 10 |
| (e-3) | 10 | 10 | 0 | 10 | 10 | 10 |
| Total | 150 | 140 | 140 | 150 | 140 | 130 |

| Results of Evaluation | | | | | | |
|---|---|---|---|---|---|---|
| Formability (MFR) | ⓞ | ⓞ | ⓞ | ○ | ⓞ | ○ |
| Coloring Properties | ○ | ○ | ○ | Δ | Δ | × |
| Injection Molding Appearance | ⓞ | ⓞ | ⓞ | ⓞ | ○ | × |
| Hardness | ⓞ | ⓞ | ⓞ | ⓞ | ⓞ | ⓞ |
| Wear Resistance | ⓞ | ⓞ | ⓞ | Δ | Δ | ⓞ |
| Lightness in Weight (density) | ○ | ○ | ○ | ○ | ○ | ○ |

The following were prepared as the (A) component.

(A-12) oil-extended 1,2-polybutadiene: 1,2-vinyl bond content = 90%, Mw = 400,000, extender oil (e-1) amount = 30%, MFR = 1.6

(A-13) oil-extended 1,2-polybutadiene: 1,2-vinyl bond content = 90%, Mw = 300,000, extender oil (e-3) amount = 20%, MFR = 4.5

Examples 28 and 29, Comparative Examples 27 to 28 (the above, solid compounding), Example 30 and Comparative Example 29 (the above, sponge compounding)

According to compounding formulations shown in the following tables, compounding agents excluding a crosslinking agent, a vulcanization accelerator and (a foaming agent) were kneaded by the use of a Banbury mixer at a temperature of 90 to 130°C for 5 minutes, and then, a specified amount was added with a 10-inch test roll machine to prepare a non-crosslinked compound.

The non-crosslinked compound prepared was formed to a specified shape, and crosslinked with a 150T vapor-curing (crosslinking) press machine under conditions shown in the tables to obtain each crosslinked formed article. Results are shown in the following tables.

Table 11 shows examples of solid compounding. Examples 28 and 29 are examples using oil-extended rubber (A-12) of the invention, and in processability, the decrease of the time necessary for room temperature cooled compound to tightly wrap around a roll machine resulted in dissolving the conventional disadvantage that the processing time was long, compared to conventional (a-3) RB830. Further, also for crosslinking formability, a flash of the formed article became substantially thin, so that the dimensional accuracy of the formed article was improved. Furthermore, the formed article is excellent in coloring properties, and can be applied to a product requiring brilliant colors. As for wear resistance improved by crosslinking, Examples 28 and 29 and Comparative Examples 27 and 28 were both good, and there was no difference therebetween.

On the other hand, Table 12 shows examples of sponge compounding. Example 30 is an example using oil-extended rubber (A-13) of the invention, and similarly to the case of solid compounding, also in sponge compounding, in processability, the time required until a compound cooled to room temperature was tightly wrapped around a roll machine in processing decreased to be able to solve the conventional disadvantage that the processing time was long, compared to conventional (a-3) RB830. Further, also for crosslinking formability, a flash of the formed article became substantially thin, so that the dimensional accuracy of the formed article was improved. Furthermore, the foaming ratio was increased when the same amount of foaming agent was added, because of the excellent foaming properties of oil-extended rubber (A-13) of the invention. This indicates that it becomes possible to decrease the amount of the expensive foaming agent, which makes it possible to reduce compounding unit cost. As for the wear resistance of crosslinked composition, Example was superior to Comparative Example.

**Table 11**

| | Example | | Comparative Example | |
|---|---|---|---|---|
| | 28 | 29 | 27 | 28 |
| Compounding Ratio (parts) | | | | |
| (A-12) | 60.0 | 60.0 | 0 | 0 |
| (a-3) RB830 | 0 | 0 | 60.0 | 60.0 |
| (B-5) IR2200 | 20.0 | 20.0 | 20.0 | 20.0 |
| (B-10) BR01 | 20.0 | 20.0 | 20.0 | 20.0 |
| Stearic Acid | 0.5 | 0.5 | 0.5 | 0.5 |
| Silica | 0 | 30.0 | 0 | 30.0 |
| Diethylene Glycol | 0 | 2.0 | 0 | 2.0 |
| Polyethylene Glycol | 0 | 1.0 | 0 | 1.0 |
| Antioxidant TNP | 1.0 | 1.0 | 1.0 | 1.0 |
| Percumyl D | 0.1 | 0.2 | 0.1 | 0.2 |
| Total | 100.6 | 134.7 | 100.6 | 134.7 |

| Crosslinking Conditions | | | | |
|---|---|---|---|---|
| Temperature (°C) | 160 | 160 | 160 | 160 |
| Time (min) | 15 | 10 | 15 | 10 |

| Results of Evaluation | | | | |
|---|---|---|---|---|
| Roll Wrapping Properties (Processability) | ○ | Δ | ○ | Δ |
| Formability | ○ | Δ | ○ | Δ |
| Coloring Properties | ○ | Δ | Δ | × |
| Wear Resistance (Akron abrasion method) (cc/1,000 cycles) | ○ | ⓞ | ○ | ⓞ |

**Table 12**

| | Example | Comparative Example |
|---|---|---|
| | 30 | 29 |
| Compounding Ratio (parts) | | |
| (A-13) | 60.0 | 0 |
| (a-3) RB830 | 0 | 60.0 |
| (B-5) IR2200 | 30.0 | 30.0 |
| (B-10) BR01 | 10.0 | 10.0 |
| Stearic Acid | 2.0 | 2.0 |
| Zinc Oxide No. 2 | 3.0 | 3.0 |
| Silica | 30.0 | 30.0 |
| Hard Clay | 20.0 | 20.0 |
| Diethylene Glycol | 3.0 | 3.0 |
| Antioxidant BHT | 1.0 | 1.0 |
| Titanium Oxide | 5.0 | 5.0 |
| Sulfur Powder | 1.3 | 1.3 |
| Vulcanization Accelerator MBTS | 1.4 | 1.4 |
| Vulcanization Accelerator MBT | 0.3 | 0.3 |
| Foaming Aid Cellpaste K5 | 2.0 | 2.0 |
| Foaming Agent ADCA | 2.0 | 2.0 |
| Foaming Agent DNPT | 2.0 | 2.0 |
| Total | 173.0 | 173.0 |

| Crosslinking Conditions | | |
|---|---|---|
| Temperature (°C) | 165 | 165 |
| Time (min) | 10 | 10 |

| Results of Evaluation | | |
|---|---|---|
| Roll Wrapping Properties (Processability) | ○ | Δ |
| Formability | ○ | Δ |
| (Line) Foaming Ratio (times) | 1.53 | 1.47 |
| Density (Mg/m³) | 0.30 | 0.37 |
| Wear Resistance (Akron abrasion method) (cc/1,000 cycles) | ○ | Δ |

The followings were prepared as the (A) component.

(A-14) oil-extended 1,2-polybutadiene: 1,2-vinyl bond content = 90%, Mw = 200,000, extender oil (e-3) amount = 30%, MFR = 11

(A-15) oil-extended 1,2-polybutadiene: 1,2-vinyl bond content = 90%, Mw = 150,000, extender oil (e-3) amount = 30%, MFR = 15

(A-16) oil-extended 1,2-polybutadiene: 1,2-vinyl bond content = 90%, Mw = 300,000, extender oil (e-3) amount = 30%, MFR = 5

### Examples 31 to 36 and Comparative Examples 30 to 35

In the following tables, Examples 31 and 32 and Comparative Examples 30 and 31 relate to a laminate comprising a base layer having laminated thereon a resin binding material (resin layer), Examples 33 and 34 and Comparative Examples 32 and 33 relate to a laminate comprising a base layer having laminated thereon a steel reinforcing material (resin layer), and Examples 35 and 36 and Comparative Examples 34 and 35 relate to a laminate comprising a base layer having laminated thereon a clearance-filling material (resin layer).

According to compounding formulations shown in the following tables, compounding agents excluding a crosslinking agent, a vulcanization accelerator and (a foaming agent) were kneaded by the use of a Banbury mixer at a temperature of 90 to 130°C for 5 minutes, and then, a specified amount was added with a 10-inch roll machine to prepare a non-crosslinked resin layer.

The non-crosslinked resin layer prepared was formed to a specified shape, placed on a base layer, and heat treated in a heat circulating oven at 150°C for 30 minutes to conduct crosslinking (foaming), thereby obtaining a laminate. Results are shown in the following tables.

Table 13 shows examples of resin binding material resin layer compounding. Examples 31 and 32 using the resin layers of the invention are examples using oil-extended rubber (A-14) of the invention, and preferred because they are excellent in kneading processability, and fitting ability test and attachability which are an index of fluidity, compared to conventional (a-4) RB810. As for crosslinking hardness and vibration-damping properties improved by crosslinking, Examples 31 and 32 and Comparative Examples 30 and 31 are both good, and there is no difference therebetween.

Table 14 shows examples of steel reinforcing material resin layer compounding. Examples 33 and 34 using the resin layers of the invention are examples using oil-extended rubber (A-15) of the invention, and preferred because they are excellent in attachability which are an index of fluidity, compared to conventional (a-4) RB810. As for kneading processability and crosslinking hardness and vibration-damping properties, Examples 33 and 34 and Comparative Examples 32 and 33 are both good, and there is no difference therebetween.

Table 15 shows examples of clearance-filling sponge resin layer compounding. Examples 35 and 36 using the resin layers of the invention are examples using oil-extended rubber (A-16) of the invention, and exhibited better results, in kneading processability, in the time required until a compound cooled to room temperature was tightly wrapped around a roll machine, compared to conventional (a-4) RB810.

Examples 35 and 36 are preferred, because they are excellent in crosslinking foaming ratio which is an index of fluidity (the more excellent fluidity is, the more excellent foaming properties are). As for foaming appearance, Examples and Comparative Examples were both good, and Example 35 was particularly preferred.

AS for steel plate adhesion improved by crosslinking, Examples 35 and 36 were preferred, because they were superior to Comparative Examples 34 and 35.

**Table 13**

| | Example | | Comparative Example | |
|---|---|---|---|---|
| | 31 | 32 | 30 | 31 |
| Compounding Ratio (parts) | | | | |
| (A-14) | 70 | 80 | 0 | 0 |
| (a-4) RB810 | 0 | 0 | 70 | 80 |
| (B-11) TR2000 | 30 | 20 | 30 | 20 |
| Zinc Oxide No. 1 | 1 | 0 | 1 | 0 |
| Stearic Acid | 1 | 1 | 1 | 1 |
| CaCO₃ Super S | 250 | 0 | 250 | 0 |
| Talc SW | 0 | 250 | 0 | 250 |
| FEF Carbon Black | 3 | 3 | 3 | 3 |
| (e-3) | 15 | 15 | 15 | 15 |
| Diethylene Glycol | 1 | 0 | 1 | 0 |
| Sulfur Powder | 30 | 0 | 30 | 0 |
| Vulcanization Accelerator TMTD | 7 | 0 | 7 | 0 |
| Vulcanization Accelerator MBTS | 4 | 0 | 4 | 0 |
| Percumyl D | 0 | 10 | 0 | 10 |

| Results of Evaluation | | | | |
|---|---|---|---|---|
| Kneading Processability | ⓞ | ⓞ | Δ-○ | Δ-○ |
| Fitting Ability Test | ⓞ | ⓞ | ○ | ○ |
| Crosslinking Hardness | 73 | 75 | 80 | 83 |
| Attachability | ⓞ | ⓞ | Δ | Δ |
| Vibration-Damping Properties (Coefficient of Loss) | ⓞ | ⓞ | ⓞ | ⓞ |

**Table 14**

| | Example | | Comparative Example | |
|---|---|---|---|---|
| | 33 | 34 | 32 | 33 |
| Compounding Ratio (parts) | | | | |
| (A-15) | 50 | 30 | 0 | 0 |
| (a-4) RB810 | 0 | 0 | 50 | 30 |
| (B-12) Liquid Polybutadiene | 50 | 70 | 50 | 70 |
| Zinc Oxide No. 1 | 2 | 0 | 2 | 0 |
| Stearic Acid | 2 | 0 | 2 | 0 |
| CaCO₃ Super S | 200 | 150 | 200 | 150 |
| Straight Asphalt | 60 | 70 | 60 | 70 |
| HAF Carbon Black | 2 | 2 | 2 | 2 |
| Sulfur Powder | 20 | 0 | 20 | 0 |
| Vulcanization Accelerator TMTD | 7 | 0 | 7 | 0 |
| Vulcanization Accelerator MBTS | 4 | 0 | 4 | 0 |
| Hicross M | 0 | 30 | 0 | 30 |
| Perhexa 3M | 0 | 10 | 0 | 10 |

| Results of Evaluation | | | | |
|---|---|---|---|---|
| Kneading Processability | ⓞ | ○ | ⓞ | ○ |
| Attachability | ⓞ | ⓞ | Δ | Δ |
| Steel Plate Adhesion | ⓞ | ⓞ | Δ | ○ |
| Crosslinking Hardness | ⓞ | ⓞ | ⓞ | ⓞ |

**Table 15**

| | Example | | Comparative Example | |
|---|---|---|---|---|
| | 35 | 36 | 34 | 35 |
| Compounding Ratio (parts) | | | | |
| (A-16) | 60 | 40 | 0 | 0 |
| (a-4) RB810 | 0 | 0 | 60 | 40 |
| (B-13) SBR1507 | 40 | 60 | 40 | 60 |
| Zinc Oxide No. 1 | 5 | 5 | 5 | 5 |
| Stearic Acid | 2 | 2 | 2 | 2 |
| CaCO₃ Super S | 40 | 40 | 40 | 40 |
| Straight Asphalt | 5 | 5 | 5 | 5 |
| FEF Carbon Black | 4 | 4 | 4 | 4 |
| Sulfur Powder | 5 | 0 | 5 | 0 |
| Vulcanization Accelerator TMTD | 0.5 | 11 | 0.5 | 11 |
| Vulcanization Accelerator MBTS | 2 | 0 | 2 | 0 |
| Vulcanization Accelerator CBS | 0 | 5 | 0 | 5 |
| Foaming Agent ADCA | 20 | 20 | 20 | 20 |
| Foaming Aid Cellpaste K5 | 10 | 10 | 10 | 10 |

| Results of Evaluation | | | | |
|---|---|---|---|---|
| Kneading Processability | ⓞ | ⓞ | ○ | ○ |
| Foaming Ratio | ⓞ | ○ | ○ | Δ |
| Foaming Appearance | ⓞ | ○ | ○ | ○ |
| Steel Plate Adhesion | ⓞ | ⓞ | Δ-○ | ○ |
| Attachability | ⓞ | ⓞ | ⓞ | ⓞ |

The following were prepared as the (A) component.

(A-17) oil-extended 1,2-polybutadiene: 1,2-vinyl bond content = 90%, Mw = 150,000, extender oil (e-1) amount = 50%, MFR = 150

(A-18) oil-extended 1,2-polybutadiene: 1,2-vinyl bond content = 90%, Mw = 100,000, extender oil (e-1) amount = 30%, MFR = 150

Pellet-like master batches having the following compositions were produced by adding respective components at once and mixing them at a blend temperature of 70°C by the use of a pressure kneader manufactured by Moriyama Manufacturing Co., Ltd.

Vulcanization accelerator master batches;
Master batch A: MBTS/(A-17) = 50/50
Master batch B: MBTS/(A-18) = 50/50
Master batch C: MBTS/(a-4) = 50/50
Master batch D: MBTS/(A-17) = 0.5/99.5
Master batch E: MBTS/(A-18) = 99/1

Curing master batches;
Master batch F: Sulfur powder/(A-17) = 50/50
Master batch G: Sulfur powder/(A-18) = 50/50
Master batch H: Sulfur powder/(a-4) = 50/50

### Examples 37 to 42 and Comparative Examples 36 to 43

The roll processability of each master batch, the blocking properties of master batch pellets, and the good or poor of the shape and form of each sheet and pellets are shown in the following Table 16. Examples 37 to 40 are examples using oil-extended rubber (A-17) or oil-extended rubber (A-18) of the invention, and preferred because they are excellent in roll processability, anti-blocking properties and the shape of the master batch, compared to Comparative Examples 36 and 39 using conventional (a-4) RB810 and Comparative Examples 37 and 38 each using a composition out of the scope of the invention.

The dispersibility of each master batch is shown in the following Table 17. Examples 41 and 42 in which a master batch using oil-extended rubber (A-17) or oil-extended rubber (A-18) of the invention is added to a compounding system are preferred, because they are excellent in dispersibility, compared to conventional (a-4) RB810 and Comparative Examples 40 to 43 out of the scope of the invention.

**Table 16**

| | Example | | | | Comparative Example | | | |
|---|---|---|---|---|---|---|---|---|
| | 37 | 38 | 39 | 40 | 36 | 37 | 38 | 39 |
| Name of Master Batch | A | B | F | G | C | D | E | H |
| Results of Evaluation | | | | | | | | |
| Roll Wrapping Properties | ○ | ○ | ○ | ○ | ○-Δ | ○ | × | ○-Δ |
| Blocking Properties | ○ | ○ | ○ | ○ | ○ | Δ | ○ | ○ |
| Shape of Master Batch | ○ | ○ | ○ | ○ | Δ | ○ | × | Δ |

**Table 17**

| | Example | | Comparative Example | | | |
|---|---|---|---|---|---|---|
| | 41 | 42 | 40 | 41 | 42 | 43 |
| Compounding Ratio (parts) | | | | | | |
| (B-14) SBR1500 | 100 | 100 | 100 | 100 | 100 | 100 |
| HAF Carbon Black | 50 | 50 | 50 | 50 | 50 | 50 |
| (e-4) | 9 | 9 | 9 | 9 | 9 | 9 |
| Stearic Acid | 3 | 3 | 3 | 3 | 3 | 3 |
| Zinc Oxide No. 1 | 4 | 4 | 4 | 4 | 4 | 4 |
| Master Batch A/F | 4/3 | 0 | 0 | 0 | 0 | 0 |
| Master Batch B/G | 0 | 4/3 | 0 | 0 | 0 | 0 |
| Master Batch C/H | 0 | 0 | 4/3 | 0 | 0 | 0 |
| Master Batch D/F | 0 | 0 | 0 | 40/3 | 0 | 0 |
| Master Batch E/F | 0 | 0 | 0 | 0 | 2/3 | 0 |
| Vulcanization Accelerator MBTS | 0 | 0 | 0 | 0 | 0 | 2 |
| Sulfur Powder | 0 | 0 | 0 | 0 | 0 | 1.5 |

| Results of Evaluation | | | | | | |
|---|---|---|---|---|---|---|
| Dispersibility | ○ | ○ | Δ | Δ | × | × |

### Industrial Applicability

The oil-extended 1,2-polybutadiene of the invention and the composition thereof are excellent in forming processability and mechanical strength, particularly in wear resistance, characterizing conventional 1,2-polybutadiene, and further excellent in fluidity, coloring properties (high distinctness of image), flexibility and attachability. Further, of the thermoplastic elastomers, the oil-extended 1,2-polybutadiene of the invention has a forming temperature as low as about 150°C, and this is advantageous from the viewpoint of energy in production and processing.

Furthermore, the oil-extended 1,2-polybutadiene of the invention and the composition thereof are curable with sulfur, high in peroxide crosslinking activity, and excellent in filling properties of fillers or chemicals, so that they are available as crosslinking (curing) polymers or reaction aids for other crosslinking (curing) polymers.

In addition, the formed article of the invention crosslinked and foamed has no flow mark, and is also excellent in dimensional accuracy, durability and cushioning properties, so that it can also be applied to thermoformed sponges.

The oil-extended 1,2-polybutadiene of the invention and the composition thereof are useful as various formed articles such as automobile parts, building material parts, footwear, toys, miscellaneous goods and sporting and health goods, various sheets and films, other industrial goods, buffer materials and packaging materials. They can also be used, for example, for automobile interior and exterior goods such as tire members including treads, sidewalls, carcasses and the like, car mats, bumpers, mud guards, exterior lacings, gaskets for window sealing, gaskets for door sealing, gaskets for trunk sealing, roof side rails, emblems, weather strips and outer layers of instrument panels; automobile interior constituents integrated with fabric and/or non-woven fabric; industrial goods such as belts, hoses, rubber cushions, vibration-damping materials, soundproofing materials, wire coating materials, backing materials used for tiles, car mats, carpets and the like, and medical goods such as infusion tubes and syringes; and household and miscellaneous goods such as cutting boards and grips (of kitchen knives).

The shoe sole material of the invention is excellent in appearance, and excellent in flexibility, wear resistance and lightness in weight. Accordingly, the shoe sole material of the invention is also useful as shoe sole materials of the overall footwear specifically such as men's shoes, ladies' shoes, casual shoes, running shoes, jogging shoes, tracking shoes, various athletic shoes, mountaineering boots, dress shoes, golf shoes, house shoes, slippers and beach shoes.

The laminate of the invention can be uniformly laminated even to the base layer having a complicated shape and is excellent in vibration-damping properties, antivibration properties, sound insulating properties, sound absorbing properties, soundproofing properties and sealing properties. Accordingly, the laminate of the invention is suitable as sound insulating materials, soundproofing materials, vibration-damping materials, steel plate-reinforcing materials, clearance-filling materials, antivibration materials, sealing materials, thermoset plastic dampers and the like, and can be widely used as various linings industrial goods, automobile interior materials, building materials, daily necessaries, sports goods, toys and the like, as other applications.

Further, according to the clearance-filling method of the invention, a clearance between the base layers can be easily filled with the composition of the invention excellent in fluidity and attachability.

In the master batch of the invention, the oil-extended 1,2-polybutadiene excellent in fluidity and anti-blocking properties is used, so that the dispersibility of a functional compound for rubber or plastics is good, and the functional compound can be mixed in larger amounts, compared to conventional functional compounds. When the functional compound is transparent, the master batch is also excellent in transparency, and further has functional compound-entrapping properties (high filling properties). Further, the use of the master batch of the invention makes it easy to conduct processing for a shorter period of time than before, and decreases contamination of working environment to enable efficient working, which causes an advantage of being friendly to the environment. Further, the use of the master batch of the invention heightens the weighing accuracy, the dispersion accuracy and the processing accuracy, thereby being able to obtain high-accuracy functional parts made of rubber or plastics (such as automobile important security parts and precision electric parts) . Like this, the master batch of the invention exhibits the excellent effects in the production of mater batches, plastics and rubber products.

## Claims

1. Oil-extended 1,2-polybutadiene containing (e) an extender oil in an amount of 1 to 200 parts by weight based on 100 parts by weight of (a) 1,2-polybutadiene.

2. The oil-extended 1, 2-polybutadiene according to claim 1, in which (a) the 1,2-polybutadiene is syndiotactic 1,2-polybutadiene.

3. The oil-extended 1,2-polybutadiene according to claim 1 or 2, in which (a) the 1, 2-polybutadiene has a weight average molecular weight of 10,000 to 5,000,000, and a 1,2-vinyl bond content of 70% or more.

4. The oil-extended 1,2-polybutadiene according to any one of claims 1 to 3, in which (e) the extender oil has a viscosity gravity constant (V. G. C. value) of 0.790 to 0.999.

5. Amethod for producing oil-extended 1,2-polybutadiene comprising a first step of mixing 1 to 200 parts by weight of (e) an extender oil with 100 parts by weight (converted to solid content) of a 1,2-polybutadiene solution in a solution state, and a second step of conducting desolvation.

6. An oil-extended 1,2-polybutadiene composition containing (C) foaming agent in an amount of 1 to 300 parts by weight based on 100 parts by weight of (A) the oil-extended 1,2-polybutadiene according to any one of claims 1 to 4.

7. A master batch containing 2 to 95% by weight of the (A) component according to any one of claims 1 to 4 and 98 to 5% by weight of (G) a functional compound for rubber or plastics [with the proviso that (A)+(G) = 100% by weight].

8. The master batch according to claim 7, in which (G) the functional compound described above is (C) a foaming agent, (D) a crosslinking agent, (E) a softening agent and (F) at least one component selected from the group consisting of a filling agent, a bituminous material, an activator, a flame retardant, an antioxidant, an antiaging agent, a lubricant, a coloring agent, an ultraviolet absorber, an antistatic agent, a thermal stabilizer, a processing aid, a light (weather) -resisting agent and an antimicrobial agent, excluding the above-mentioned (C) to (E) components.

9. A thermoplastic polymer composition containing 1 to 99 parts by weight of (A) the oil-extended 1,2-polybutadiene according to any one of claims 1 to 4 and 99 to 1 part by weight of (B) at least one selected from the group consisting of a thermoplastic resin, a thermoplastic elastomer, a natural rubber and a synthetic rubber other than the above-mentioned (A) component [with the proviso that (A) + (B) = 100 parts by weight].

10. The thermoplastic polymer composition according to claim 9 further containing (C) a foaming agent in an amount of 1 to 300 parts by weight based on 100 parts by weight of the total amount of the (A) component and the (B) component.

11. The thermoplastic polymer composition according to claim 9 or 10 further containing (D-1) at least one selected from the group consisting of a combination of sulfur or a compound producing sulfur by heating and a vulcanization accelerator, an organic peroxide or a combination of an organic peroxide and a multifunctional monomer, and a combination of a silanol compound and an aqueous agent.

12. A formed article obtained by forming the oil-extended 1,2-polybutadiene described in any one of claims 1 to 4.

13. A shoe sole material obtained by foaming the oil-extended 1,2-polybutadiene composition according to claim 6.

14. A shoe sole material obtained by crosslinking and forming the oil-extended 1,2-polybutadiene composition according to claim 6.

15. A shoe sole material obtained by crosslinking and forming the thermoplastic polymer composition according to any one of claims 9 to 11.

16. A laminate comprising a base layer having laminated thereon a resin layer containing the oil-extended 1,2-polybutadiene composition according to claim 6.

17. The laminate according to claim 16, in which an asphalt layer is allowed to intervene between the base layer and the resin layer.

18. A method for producing a laminate which comprises filling the oil-extended 1,2-polybutadiene composition according to claim 6 in a clearance between a plurality of base layers, and crosslinking and foaming it.

19. A method for producing a laminate which comprises filling the thermoplastic polymer composition according to any one of claims 9 to 11 in a clearance between a plurality of base layers, and crosslinking and foaming it.

20. An automobile interior constituent in which the oil-extended 1,2-polybutadiene composition according to claim 6 is integrated with woven fabric and/or nonwoven fabric.
